# EUROPÄISCHE PATENTANMELDUNG

(11) **EP 4 744 756 A2**
(43) Veröffentlichungstag der Anmeldung: **20.05.2026**
(21) Anmeldenummer: 26169108.3
(22) Anmeldetag: 16.10.2024
(51) Int. Cl.: B01D 46/52

(54) **RINGFILTERELEMENT MIT RADIAL INNENLIEGENDER EINGRIFFSKONTUR ZUR WINKELPOSITIONIERUNG**

(30) Priorität: 23.10.2023 DE 102023129022
(62) Teilanmeldung aus: 24791339.5
(71) Anmelder: MANN+HUMMEL GmbH, 71636 Ludwigsburg (DE)
(72) Erfinder: NEEF, Pascal, 71636 Ludwigsburg (DE); HETTKAMP, Philipp, 71636 Ludwigsburg (DE); GRAD, Johannes, 71636 Ludwigsburg (DE); PEREIRA MADEIRA, Pedro Miguel, 71636 Ludwigsburg (DE); HALLBAUER, Eva, 71636 Ludwigsburg (DE); PEKNY, Peter, 71636 Ludwigsburg (DE); WEBER, Andreas, 71636 Ludwigsburg (DE); WITTMERS, Christoph, 71636 Ludwigsburg (DE); GERLACH, Steffen, 71636 Ludwigsburg (DE); RIEGER, Mario, 71636 Ludwigsburg (DE); HANSELMANN, Markus, 71636 Ludwigsburg (DE); KUPFER, Friedrich, 71636 Ludwigsburg (DE); WEISS, Dieter, 71636 Ludwigsburg (DE); SCHMID, Daniel, 71636 Ludwigsburg (DE); RUHLAND, Klaus-Dieter, 71636 Ludwigsburg (DE); KAUFMANN, Michael, 71636 Ludwigsburg (DE); STARK, Dennis, 71636 Ludwigsburg (DE)
(74) Vertreter: Mann + Hummel Intellectual Property

(57) **Zusammenfassung**

Die Erfindung betrifft ein Ringfilterelement mit einem Filtermediumkörper in Form eines Faltenbalgs, der radial innen wenigstens eine Faltenaufspreizung aufweist, welche an eine offene Endscheibe angrenzt. Die offene Endscheibe weist wenigstens eine Aussparung auf. Die Aussparung und die Faltenaufspreizung sind in Überdeckung miteinander angeordnet. Am von der offenen Endscheibe abgewandten axialen Ende ist der Filtermediumkörper von einer geschlossen Endscheibe abgedichtet. Beim Gebrauch des Ringfilterelements in einer Filtervorrichtung greift ein Eingriffselement in die Faltenaufspreizung und/oder in die Aussparung ein. Das Eingriffselement kann an einem Filtergehäuse oder einem weiteren Ringfilterelement der Filtervorrichtung ausgebildet sein. Somit ist eine Winkelposition des Ringfilterelements bezüglich des Filtergehäuses bzw. des weiteren Ringfilterelements fixiert.

## Beschreibung

Diese Patentanmeldung beansprucht die Priorität der deutschen Patentanmeldung DE102023129022.3, die am 23.10.2023 beim Deutschen Patent- und Markenamt eingereicht wurde, deren Inhalt hiermit durch Bezugnahme aufgenommen wird.

### Technisches Gebiet

Die Erfindung betrifft ein Ringfilterelement zur Luftfiltration aufweisend
- einen Filtermediumkörper, der einen Innenraum umschließt, sowie
- eine offene Endscheibe und eine geschlossene Endscheibe, die den Filtermediumkörper in Axialrichtung dichtend begrenzen.

### Stand der Technik

Ein solches Ringfilterelement ist beispielsweise aus US 2021/0069630 A1 bekannt.

Bei der Luftfiltration, etwa für Verbrennungsmotoren oder Brennstoffzellen, ist es wichtig, dass für die jeweilige Anwendung geeignete Ringfilterelemente verwendet werden. Zudem ist es häufig wichtig, dass das Ringfilterelement korrekt ausgerichtet wird. Beispielweise Luftmassenmesser reagieren oft empfindlich auf eine veränderte Ausrichtung von Filterelementen. Dies gilt auch bei im Wesentlichen rotationssymmetrischen Ringfilterelementen, die gewisse fertigungsbedingte Abweichungen von der Rotationssymmetrie aufweisen, wenn diese in unterschiedlichen Drehstellungen verbaut werden.

Aus US 2019/0308125 A1 ist ein Rundfilterelement bekannt, das einen Filtermediumkörper aufweist, dessen Wandung von dem zu reinigenden Fluid in Radialrichtung durchströmbar ist, wobei an oder benachbart zu einer Stirnseite ein umlaufender Dichtungsträger angeordnet ist, der Träger eines Positionierungselementes zur formschlüssigen Verbindung mit einem zugeordneten, gehäuseseitigen Gegenpositionierungselement ist. In einer offenen Endscheibe ist hierzu eine nach radial außen offene Ausnehmung vorgesehen.

EP 2 535 550 A2 beschreibt ein Ringfilterelement, insbesondere für eine Filtereinrichtung einer Frischluftanlage einer Brennkraftmaschine, mit einem ringförmigen Filterkörper aus einem gefalteten Bahnenmaterial. In der Umfangsrichtung aneinander grenzende Endfalten sind zur Ausbildung eines sich zur Drehlagenausrichtung des Filterelements eignenden Verbindungsbereichs direkt oder indirekt miteinander verbunden. Im Verbindungsbereich kann eine radial nach außen offene Längsnut ausgebildet sein, die insbesondere von außen einfach abgetastet werden kann und beispielsweise eine Zwangsausrichtung ermöglicht. Eine Endscheibe kann eine zur nach radial außen offenen Längsnut komplementäre, nach radial außen offene Aussparung aufweisen. Alternativ kann im Verbindungsbereich eine radial nach innen offene Längsnut ausgebildet sein. Der jeweilige Nutgrund der Längsnut kann beispielsweise durch die aneinander anliegenden Endfalten gebildet sein. An einem Gehäuse ist eine Ausrichtkontur ausgeformt, die beim Einsetzen des Ringfilterelements mit dem Verbindungsbereich zusammenwirkt, um so eine vorbestimmte Drehlage des Ringfilterelements innerhalb des Gehäuses zu erzwingen.

Die bereits o.g. US 2021/0069630 A1 beschreibt ein Filterelement mit einem Filterbalg, der sich entlang einer Längsachse erstreckt und einen Innenraum umgibt. Der Filterbalg ist aus einem gefalteten Filtermaterial gebildet, das auf einem Stützrohr angeordnet ist. Der Filterbalg kann als Rundelement ausgebildet sein. An einem stirnseitigen ersten Ende und einem diesem gegenüberliegenden stirnseitigen zweiten Ende des Filterelements sind Endscheiben angeordnet, welche den Filterbalg an seinen Stirnkanten abdichten und von denen eine offen und die andere geschlossen ist. Der Filterbalg weist an beiden seiner Enden jeweils eine außenseitige Einkerbung auf, deren axiale Länge in Richtung der Längsachse kürzer als die Längserstreckung des Filterbalgs ist. Die Einkerbungen sind lokal begrenzt und erstrecken sich nicht über die gesamte Länge des Faltenbalgs. Vorzugsweise haben die Einkerbungen den größten Faltenkantenabstand an den jeweiligen Endscheiben und verjüngen sich mit zunehmendem Abstand von der Endscheibe. Die Einkerbungen weiten den Abstand zwischen zwei benachbarten Falten auf, wobei die Falten sich insgesamt über die gesamte Länge des Faltenbalgs erstrecken. Die Einkerbungen erlauben einen lagerichtigen Einbau des Filterelements in ein Gehäuse

Bei einer außenseitigen Faltenaufspreizung besteht eine gewisse Gefahr, dass der Filtermediumkörper, insbesondere an Falzkanten, welche die Faltenaufspreizung begrenzen, bei der Handhabung, beispielsweise beim Ausklopfen zu Reinigungszwecken, beschädigt wird.

Es ist eine Aufgabe der Erfindung, eine zur Ausrichtung eines Ringfilterelements dienende Kontur vor Beschädigungen zu schützen.

### Offenbarung der Erfindung

Diese Aufgabe wird durch ein Ringfilterelement gemäß Anspruch 1 und eine Filtervorrichtung gemäß Anspruch 9 gelöst. Ebenfalls gelöst wird diese Aufgabe durch Verwendungen gemäß den Ansprüchen 14 und 15. Bevorzugte Ausführungsformen sind in den jeweiligen Unteransprüchen und der Beschreibung angegeben.

Erfindungsgemäß ist ein Ringfilterelement zur Luftfiltration, insbesondere zur Filtration der Ansaugluft einer Brennstoffzelle, vorgesehen. Für einen Gebrauch ist das Ringfilterelement in einem Filtergehäuse anordenbar. Insbesondere kann das Ringfilterelement als Kathodenluftfilter einer Brennstoffzelle verwendet werden.

Das Ringfilterelement weist einen Filtermediumkörper auf, der einen Innenraum umschließt. Das Ringfilterelement ist mithin in Umfangsrichtung geschlossen. Vorzugsweise ist das Ringfilterelement von radial außen nach radial innen durchströmbar. Alternativ kann eine Durchströmung von radial innen nach radial außen vorgesehen sein.

Eine Längsachse des Filtermediumkörpers kann sich durch dessen Innenraum erstrecken. Mit anderen Worten kann der Filtermediumkörper die Längsachse ringförmig umschließen. Richtungsangaben wie radial oder axial beziehen sich auf die Längsachse. Auch eine Winkelposition des Ringfilterelements kann bezüglich der Längsachse bestimmt werden.

Weiterhin weißt du das Ringfilterelement eine offene Endscheibe und eine geschlossene Endscheibe auf, die den Filtermediumkörper in Axialrichtung dichtend begrenzen. Die beiden Endscheiben sind an gegenüberliegenden axialen Enden des Filtermediumkörpers angeordnet. Die offene Endscheibe kann das Ringfilterelement zudem gegenüber dem Filtergehäuse und/oder einem weiteren Ringfilterelement abdichten. Die offene Endscheibe weist zumindest eine zentrale Öffnung auf, welche den Innenraum an einem axialen Ende nach außen eröffnet. Im montierten Zustand kann ein Fluidauslass oder Fluideinlass durch die zentrale Öffnung mit dem Innenraum kommunizieren. Am anderen axialen Ende verhindert die geschlossene Endscheibe eine Einströmung in den bzw. eine Ausströmung aus dem Innenraum; eine Umgehung des Filtermediumkörpers wird somit vermieden.

Die Endscheiben können an die Filtermediumkörper angegossen oder angeklebt sein. Die Endscheiben können beispielsweise aus Polyurethan, insbesondere Polyurethan-Schaum, bestehen.

Die geschlossene Endscheibe kann einteilig oder mehrteilig sein. Eine mehrteilige geschlossene Endscheibe kann beispielsweise einen Verschlusskörper aufweisen, welcher in einen Ringkörper der Endscheibe eingebettet ist.

Der Filtermediumkörper weist einen Faltenbalg auf, der erfindungsgemäß an einer Innenmantelfläche mit wenigstens einer Faltenaufspreizung versehen ist. Der Faltenbalg bzw. der Filtermediumkörper kann insbesondere durch ein sternförmig gefaltetes Filtermedium gebildet sein. Ein Faltenwinkel und/oder ein Faltenabstand (in Umfangsrichtung gemessener Abstand von radial inneren Falzkanten) kann im Bereich der Faltenaufspreizung an der Innenmantelfläche des Ringfilterelements größer sein als bei einer Vielzahl von Falten des Faltenbalgs. Insbesondere können - vom Bereich der wenigstens einen Faltenaufspreizung abgesehen - alle Falten denselben Faltenwinkel bzw. Faltenabstand aufweisen. Die Faltenaufspreizung an der Innenmantelfläche grenzt grundsätzlich an die offene Endscheibe an.

Die Faltenaufspreizung bildet ein Gegeneingriffselement zum Eingriff eines Eingriffselements einer Positioniervorrichtung zur, insbesondere eindeutigen, relativen Winkelpositionierung des Ringfilterelements gegenüber dem Filtergehäuse oder einem weiteren Filterelement der Filtervorrichtung zumindest mit. Die Faltenaufprallspreizung schafft Platz für den Eingriff des Eingriffselements der Positioniervorrichtung. Zudem bewirkt die lokal vorhandene Faltenaufspreizung eine definierte Winkelposition des ersten Ringfilterelements relativ zum Eingriffselement. Das Eingriffselement und das Gegeneingriffselement können derart aufeinander abgestimmt sein (d. h. sie korrespondieren miteinander), dass eine Deformation dieser Elemente bei der Montage nur in geringem Maße oder vorzugsweise nicht erforderlich ist, gleichzeitig aber nur ein geringes oder vorzugsweise kein Drehspiel auftritt. Ersteres verringert den erforderlichen Kraftaufwand und vermeidet Beschädigungen. Letzteres bewirkt die definierte rotatorische Ausrichtung des Ringfilterelements. Das Drehspiel bezüglich einer Mittellage kann beispielsweise maximal +/-5°, bevorzugt maximal +/-3°, besonders bevorzugt maximal +/-1°, betragen.

Weiter erfindungsgemäß weist die offene Endscheibe wenigstens eine Aussparung auf, die mit der Faltenaufspreizung fluchtet. Wenn mehrere Faltenaufspreizungen vorgesehen sind, fluchtet jeweils eine Aussparung mit einer der Faltenaufspreizungen. Die Aussparung und die Faltenaufspreizung überlappen einander in Umfangsrichtung und in radialer Richtung. Die Aussparung kann an einem Innenumfang der offenen Endscheibe angeordnet sein. Die Aussparung in der Endscheibe erleichtert das Einführen des Eingriffselements in die Faltenaufspreizung. Auch die Aussparung in der offenen Endscheibe kann Teil des Gegeneingriffselements sein, in welche das Eingriffselement im montierten Zustand eingreift.

Durch die innenseitige Anordnung der Faltenaufspreizung und der Aussparung sind diese vor mechanischen Beschädigungen bei der Handhabung des Ringfilterelements geschützt. Insbesondere besteht nicht die Gefahr, dass beim Ausklopfen des Ringfilterelements Falzkanten, welche die Faltenaufspreizung begrenzen, deformiert oder gar aufgerissen werden.

Die Faltenaufspreizung kann sich über einen Teil der Höhe des Faltenbalgs erstrecken. Dies kann im Hinblick auf die Durchströmung des Filtermediumkörpers vorteilhaft sein.

Alternativ kann sich die Faltenaufspreizung über die komplette Höhe des Faltenbalgs erstrecken. Dies kann die Herstellung des Ringfilterelements vereinfachen.

Der Filtermediumkörper kann eine hohlzylindrische Form aufweisen. Insbesondere kann das Ringfilterelement bzw. dessen Filtermediumkörper im Querschnitt kreisringförmig sein. Ein solches Ringfilterelement ist rationell herstellbar und bietet eine gute Bauraumausnutzung. In Ausführungen kann der Filtermediumkörper einen ovalen oder langovalen Querschnitt haben. Alternativ oder zusätzlich kann sich der Filtermediumkörper entlang der Längsachse verjüngen. Mit anderen Worten kann der Filtermediumkörper eine insgesamt konische Form aufweisen.

An einer Außenmantelfläche des Filtermediumkörpers kann ein Faltenwickel vorgesehen sein. Mit anderen Worten kann der Filtermediumkörper außenseitig mit einem Faden schraubenförmig umwickelt sein. Dadurch kann der Filterbalg zusätzlich fixiert und stabilisiert werden.

Es können mehrere Faltenaufspreizungen über den Innenumfang des Faltenbalgs verteilt vorgesehen sein, wobei die offene Endscheibe mehrere Aussparungen aufweist, von denen jeweils eine mit einer der Faltenaufspreizungen fluchtet. Durch eine drehsymmetrische Anordnung der Aussparungen kann die Montage des Ringfilterelements vereinfacht werden.

Vorzugsweise ist jedoch vorgesehen, dass die Faltenaufspreizungen und Aussparungen bezüglich einer Längsachse in einem nicht drehsymmetrischen Muster angeordnet sind. Es wird dann eine eindeutige Winkelposition des Ringfilterelements eingerichtet. Dies ist vorteilhaft, um eine definierte Durchströmung zu erreichen, beispielsweise im Hinblick auf die Messgenauigkeit einer nachgeordneten Komponente, etwa eines Luftmassenmessers. Zudem kann eine nicht drehsymmetrische Anordnung die Verwendung ungeeigneter Ringfilterelement wirkungsvoll ausschließen, wenn in mehrere, insbesondere alle, Faltenaufspreizungen je ein Eingriffselement eingreift.

Die zumindest eine Aussparung der offenen Endscheibe kann radial innen offen sein. Die Aussparung und eine zentrale Öffnung der Endscheibe gehen dann unmittelbar ineinander über. Die nach radial innen randseitig offene Aussparung kann auch als eine Ausbuchtung der zentralen Öffnung bezeichnet werden. Eine nach innen offene Aussparung erleichtert das Einführen eines Eingriffselements bei der Montage des Filterelements.

Alternativ kann die Aussparung der offenen Endscheibe radial innen geschlossen sein. Die Aussparung und die zentrale Öffnung der Endscheibe sind dann durch das Material der Endscheibe in radialer Richtung voneinander getrennt. Ein Eingriffselement in der Art eines axialen Fortsatzes kann durch die randseitig geschlossene Aussparung in die Faltenaufspreizung einragen.

Es kann vorgesehen sein, dass die Aussparung sich nach radial außen verjüngt und/oder sich nach radial außen erweitert und/oder dass wenigstens eine Seitenkante der Aussparung wenigstens eine Knickstelle aufweist. Wenn ein Eingriffselement ebenfalls eine entsprechende Kontur aufweist, kann die Verwendung eines geeigneten Ringfilterelements erzwungen werden, auch wenn bei verschiedenen Typen von Ringfilterelementen Aussparungen an jeweils derselben Stelle der offenen Endscheibe vorhanden sind.

Das Ringfilterelement kann ein fluiddurchlässiges Mittelrohr aufweisen, das an der Innenmantelfläche des Filtermediumkörpers angeordnet ist und mittelbar oder unmittelbar an dem Filtermediumkörper befestigt ist. Das Mittelrohr stützt den Filtermediumkörper, insbesondere bei einer Durchströmung von radial außen nach radial innen, ab. Das Mittelrohr kann gitterartig mit Axialstegen und Umfangsstegen ausgebildet sein.

Vorzugsweise ist an dem Mittelrohr zumindest ein Stützelement ausgebildet, das sich nach radial außen in die Faltenaufspreizung erstreckt. Das Stützelement des Mittelrohrs ist Teil des Gegeneingriffselements des Ringfilterelements. Das Stützelement ist grundsätzlich nach radial innen offen. Ein Eingriffselement der Positioniervorrichtung kann dann nach radial außen in das Stützelement eingreifen. Das Stützelement weist vorzugsweise einen sich nach radial außen verjüngenden, insbesondere spitz zulaufenden, Querschnitt auf. Ein Mittelrohr mit einem solchen Stützelement vereinfacht die Herstellung der Faltenaufspreizung am Innenumfang des Filtermediumkörpers, indem das Stützelement beim Zusammenfügen von Faltenbalg und Mittelrohr die Falte, in welche es eingreift, aufweitet.

Das Stützelement und das Mittelrohr können einteilig miteinander sein. Dies vereinfacht die Herstellung weiter.

An der offenen Endscheibe kann ein Stützsegment ausgebildet sein, insbesondere wobei das Stützsegment und die offene Endscheibe einteilig miteinander sind. Das Stützsegment erstreckt sich nach radial außen in die Faltenaufspreizung. Das Stützsegment der offenen Endscheibe ist Teil des Eingriffselements. Das Stützsegment weist vorzugsweise einen sich nach radial außen verjüngenden, insbesondere spitz zulaufenden, Querschnitt auf. Eine oder mehrere Falten können bei dieser Ausführungsform während der Herstellung des Ringfilterelements durch eine Gießschale aufgeweitet werden und durch die angegossene Endscheibe in der aufgespreizten Konfiguration fixiert werden. Bei dieser Ausführungsform könnte zusätzlich ein elementfestes Mittelrohr, insbesondere mit einem Stützelement, vorgesehen sein. Typischerweise wird bei dieser Ausführungsform ein gehäusefestes Mittelrohr verwendet.

Die offene Endscheibe kann zumindest eine durchgängig umlaufende Dichtung zur Anlage an einem Filtergehäuse aufweisen, insbesondere wobei die Dichtung als ein in axialer Richtung vorstehender Dichtwulst gebildet ist. Im montierten Zustand trennt die Dichtung eine Rohseite (typischerweise radial außen) von einer Reinseite (typischerweise radial innen, den Innenraum des Filtermediumkörpers enthaltend). Die Dichtung kann insbesondere eine mit dem Innenraum des Filtermediumkörpers fluidisch kommunizierende Öffnung der offenen Endscheibe vollumfänglich umlaufen. Vorzugsweise ist die Dichtung einteilig mit der Endscheibe. Der Dichtwulst kann auch als ein Dichtkragen bezeichnet werden.

Bei einer bevorzugten Weiterbildung ist vorgesehen, dass die Dichtung die wenigstens eine Aussparung radial außen umläuft, vorzugsweise wobei die Dichtung im Bereich der Aussparung eine Ausbuchtung nach radial außen aufweist. Im Übrigen kann die Dichtung kreisförmig sein. Im Bereich der Aussparung(en) weicht die Dichtung somit von der Kreisform ab. Dies gewährleistet einerseits die Abdichtung der Endscheibe beispielsweise gegenüber dem Filtergehäuse und/oder einem weiteren Ringfilterelement. Andererseits kann insbesondere am Filtergehäuse eine Dichtkontur korrespondierend zur Dichtung mit einer Ausbuchtung geformt sein. Es kann dann nur ein Ringfilterelement mit einer entsprechend ausgebuchteten Dichtung montiert werden. Dies stellt die Verwendung eines geeigneten Ringfilterelements sicher.

Bei einer alternativen Weiterbildung ist vorgesehen, dass die wenigstens eine Aussparung sich am Innenumfang der Dichtung in axialer Richtung erstreckt. Insbesondere kann die Dichtung am Innenumfang zumindest eine Ausnehmung aufweisen, die mit der Aussparung fluchtet. Mit anderen Worten kann die Ausnehmung am Innenumfang der Dichtung eine Verlängerung der Aussparung bilden. Ein Querschnitt der Dichtung kann in radialer Richtung durch die Ausnehmung reduziert sein. Auch hier kann eine Dichtkontur am Filtergehäuse korrespondierend zur Dichtung geformt sein, beispielsweise wobei unmittelbar angrenzend an die Dichtkontur das Eingriffselement vorsteht. Es kann dann nur ein Ringfilterelement mit einer Dichtung montiert werden, wenn sich die Ausnehmung (und somit das Gegeneingriffselement am Ringfilterelement) in axialer Richtung über die gesamte Höhe der Dichtung erstreckt. Dies stellt die Verwendung eines geeigneten Ringfilterelements sicher.

In den Rahmen der vorliegenden Erfindung fällt auch eine Filtervorrichtung aufweisend ein Filtergehäuse mit zumindest einem Fluideinlass und zumindest einem Fluidauslass und weiterhin aufweisend eine Ringfilterelementanordnung, die in dem Filtergehäuse angeordnet ist und den Fluideinlass von dem Fluidauslass trennt, wobei die Ringfilterelementanordnung zumindest ein erstes erfindungsgemäßes Ringfilterelement - wie oben beschrieben - aufweist. Die Filtervorrichtung ist eine Luftfiltervorrichtung. Das (erste) Ringfilterelement kann das einzige Ringfilterelement der Ringfilterelementanordnung sein; alternativ kann die Ringfilterelementanordnung zusätzlich zum ersten Ringfilterelement ein oder mehrere weitere Ringfilterelemente aufweisen, die insbesondere radial innerhalb oder radial außerhalb des ersten Ringfilterelements angeordnet sein können. Gegebenenfalls vorhandene weitere Ringfilterelemente können erfindungsgemäße oder nicht erfindungsgemäße Ringfilterelementen sein.

Die Filtervorrichtung weist eine Positioniervorrichtung mit zumindest einem sich nach radial außen erstreckenden Eingriffselement auf, wobei die Faltenaufspreizung an der Innenmantelfläche des Filtermediumkörpers des ersten Ringfilterelements ein Gegeneingriffselement zumindest mit bildet, und wobei das Eingriffselement in das Gegeneingriffselement eingreift. Vorzugsweise bildet auch die Aussparung in der offenen Endscheibe das Gegeneingriffselement zumindest mit. Das Eingriffselement kann an dem Filtergehäuse oder an einem weiteren Ringfilterelement angeordnet sein. Die Positioniervorrichtung bewirkt eine, insbesondere eindeutige, relative Winkelpositionierung des Ringfilterelements gegenüber dem Filtergehäuse bzw. dem weiteren Ringfilterelement der Filtervorrichtung.

Bei einer bevorzugten Ausführungsform weist die Filtervorrichtung kann ein an dem Filtergehäuse befestigtes, insbesondere unlösbar befestigtes, Stützrohr auf, das lösbar in dem Innenraum des Filtermediumkörpers des ersten Ringfilterelements angeordnet ist, wobei das Eingriffselement der Positioniervorrichtung an dem Stützrohr angeordnet ist. Derart kann das (erste) Ringfilterelement in seiner Drehstellung gegenüber dem Filtergehäuse ausgerichtet werden. Zudem zentriert das Stützrohr das Ringfilterelement im Filtergehäuse und kann dessen Filtermedium nach radial innen abstützen. Das Stützrohr kann beispielsweise an dem Filtergehäuse - lösbar oder unlösbar - verrastet sein, insbesondere in einer definierten Winkelposition. Alternativ kann das Stützrohr in das Filtergehäuse eingeschraubt sein. Das Stützrohr ist typischerweise fluiddurchlässig. Das fluiddurchlässige Stützrohr kann gitterartig mit Axialstegen und Umfangsstegen ausgebildet sein.

Bei einer ersten Weiterbildung dieser Ausführungsform ist radial außen an dem Stützrohr ein weiterer Filtermediumkörper eines weiteren Ringfilterelements der Ringfilterelementanordnung mittelbar oder unmittelbar befestigt. Der weitere Filtermediumkörper kann beispielsweise ein Filtervlies sein, welches um das Stützrohr gewickelt sein kann. Das wenigstens eine Eingriffselement und der weitere Filtermediumkörper können in axialer Richtung aufeinanderfolgend am Stützrohr angeordnet sein. Der Filtermediumkörper des weiteren Ringfilterelements kann ein Adsorbens, insbesondere Aktivkohle, aufweisen. Alternativ oder zusätzlich kann der radial außen an dem Stützrohr angeordnete weitere Filtermediumkörper ein so genanntes Sekundärfilterelement oder Sicherheitsfilterelement sein.

Bei einer alternativen Weiterbildung ist radial innerhalb des Stützrohrs ein inneres Ringfilterelement der Ringfilterelementanordnung angeordnet ist, welches an einer Außenmantelfläche ein zweites Gegeneingriffselement aufweist, wobei ein Eingriffselement des Stützrohrs nach radial außen in das (erste) Gegeneingriffselement des ersten Ringfilterelements und ein Eingriffselement des Stützrohrs nach radial innen in das zweite Gegeneingriffselement des inneren Ringfilterelements eingreift. Das sich nach radial außen erstreckende Eingriffselement und das sich nach radial innen erstreckende Eingriffselement können an derselben Winkelposition vorliegen. Alternativ oder zusätzlich können das sich nach radial außen erstreckende Eingriffselement und das sich nach radial innen erstreckende Eingriffselement einteilig sein. In Ausführungen können das sich nach radial außen erstreckende Eingriffselement und das sich nach radial innen erstreckende Eingriffselement aber auch an unterschiedlichen Winkelpositionen vorliegen und/oder separat voneinander ausgebildet sein.

Derart werden durch das gehäusefeste Stützrohr die beiden Ringfilterelemente relativ zueinander in ihrer Winkelposition ausgerichtet und fixiert. Wenn das Stützrohr in einer definierten Winkelposition am Filtergehäuse befestigt ist, ist zudem eine definierte Winkelposition der beiden Ringfilterelemente gegenüber dem Filtergehäuse eingerichtet. Ein Filtermediumkörper des inneren Ringfilterelements kann einen Faltenbalg aufweisen. Das zweite Gegeneingriffselement des inneren Ringfilterelements kann mit einer Faltenaufspreizung an einer Außenmantelfläche von dessen Filtermediumkörper gebildet sein. Der Filtermediumkörper des inneren Ringfilterelements kann ein Adsorbens, insbesondere Aktivkohle, aufweisen.

Die Ringfilterelementanordnung der Filtervorrichtung kann - alternativ oder zusätzlich zum inneren Ringfilterelement - ein äußeres Ringfilterelement mit einem Filtermediumkörper aufweisen, wobei der Filtermediumkörper des äußeren Ringfilterelements einen Innenraum umschließt, wobei das erste Ringfilterelement zumindest teilweise in dem Innenraum des Filtermediumkörpers des äußeren Ringfilterelements aufgenommen ist. Ein Filtermediumkörper des äußeren Ringfilterelements kann einen Faltenbalg aufweisen. Bei dieser Ausführungsform kann der Filtermediumkörper des ersten Ringfilterelements ein Adsorbens, insbesondere Aktivkohle aufweisen.

Das Filtergehäuse kann eine Gehäuse-Positioniervorrichtung zur, insbesondere eindeutigen, relativen Winkelpositionierung des äußeren Ringfilterelements gegenüber dem Filtergehäuse aufweisen, wobei die Gehäuse-Positioniervorrichtung ein Gehäuse-Eingriffselement aufweist, das sich nach radial innen erstreckt und in ein korrespondierendes Gehäuse-Gegeneingriffselement des äußeren Ringfilterelements eingreift. Derart ist das äußere Ringfilterelement in einer definierten Winkelposition relativ zum Filtergehäuse fixiert. Das Gehäuse-Gegeneingriffselement des äußeren Ringfilterelements kann mit einem Faltenaufspreizung an einer Außenmantelfläche des äußeren Ringfilterelements gebildet sein.

Alternativ oder zusätzlich zur Gehäuse-Positioniervorrichtung kann das äußere Ringfilterelement ein fluiddurchlässiges Innenrohr aufweisen, das an der Innenmantelfläche des Filtermediumkörpers des äußeren Ringfilterelements angeordnet ist und mittelbar oder unmittelbar an dem Filtermediumkörper des äußeren Ringfilterelements befestigt ist, und wobei an dem Innenrohr ein weiteres Eingriffselement angeordnet ist, insbesondere einteilig mit dem Innenrohr ist, wobei sich das weitere Eingriffselement nach radial innen erstreckt und in ein weiteres Gegeneingriffselement an der Außenmantelfläche des Filtermediumkörpers des ersten Ringfilterelements eingreift. Derart werden durch das Innenrohr des äußeren Ringfilterelements die beiden Ringfilterelemente relativ zueinander in ihrer Winkelposition ausgerichtet und fixiert. Wenn das erste Ringfilterelement (beispielsweise durch das gehäusefeste Stützrohr mit dem Eingriffselement der Positioniervorrichtung) oder das äußere Ringfilterelement (beispielsweise durch die Gehäuse-Positioniervorrichtung) in einer definierten Winkelposition am Filtergehäuse ausgerichtet ist, ist zugleich eine definierte Winkelposition beider Ringfilterelemente gegenüber dem Filtergehäuse eingerichtet. Das fluiddurchlässige Innenrohr kann gitterartig mit Axialstegen und Umfangsstegen ausgebildet sein.

Die Filtervorrichtung kann ein Zyklonelement aufweisen, welches der Ringfilterelementanordnung vorgeschaltet ist. Das Zyklonelement ist mit anderen Worten fluidisch zwischen dem Fluideinlass und der Ringfilterelementanordnung mit dem zumindest einen Ringfilterelement angeordnet. Das Zyklonelement bewirkt eine Vorabscheidung von insbesondere grobem Staub. Dadurch kann die Standzeit der Ringfilteranordnung verlängert werden.

Die Erfindung betrifft auch die Verwendung einer oben beschriebenen, erfindungsgemäßen Filtervorrichtung als Kathodenluftfilter einer Brennstoffzelle.

In den Rahmen der vorliegenden Erfindung fällt ferner eine Brennstoffzelle mit einer Anode und einer Kathode, zwischen denen ein Elektrolyt angeordnet ist, und mit einer oben beschriebenen, erfindungsgemäßen Filtervorrichtung durch welche Luft zu der Kathode leitbar ist.

Weiterhin in den Rahmen der vorliegenden Erfindung fällt eine Verwendung eines oben beschriebenen, erfindungsgemäßen Ringfilterelements in einer Filtervorrichtung mit einem Filtergehäuse, wobei ein an dem Filtergehäuse angeordnetes Eingriffselement in die Faltenaufspreizung eingreift. Die Vorteile des Ringfilterelements können bei dieser Verwendung nutzbar gemacht werden.

### Kurze Beschreibung der Zeichnungen

Weitere Merkmale und Vorteile der Erfindung ergeben sich aus der nachfolgenden detaillierten Beschreibung von Ausführungsbeispielen der Erfindung, aus den Patentansprüchen sowie anhand der Figuren der Zeichnung, die erfindungsgemäße Einzelheiten zeigen. Die zuvor genannten und noch weiter ausgeführten Merkmale können je einzeln für sich oder zu mehreren in beliebigen, zweckmäßigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können. In der Zeichnung zeigen:
- Fig. 1: eine erste Ausführungsform einer erfindungsgemäßen Filtervorrichtung mit einer Ringfilterelementanordnung aufweisend ein erfindungsgemäßes erstes Ringfilterelement und ein innerhalb des ersten Ringfilterelements angeordnetes inneres Ringfilterelement, in einem schematischen Längsschnitt;
- Fig. 2: das erste Ringfilterelement der Filtervorrichtung von Figur 1, in einem schematischen Längsschnitt;
- Fig. 3: das innere Ringfilterelement der Filtervorrichtung von Figur 1, in einem schematischen Längsschnitt;
- Fig. 4: einen schematischen Querschnitt durch die Filtervorrichtung von Figur 1;
- Fig. 5: einen vergrößerten Ausschnitt von Figur 4;
- Fig. 6: einen vergrößerten Ausschnitt von Figur 1;
- Fig. 7: eine zweite Ausführungsform einer erfindungsgemäßen Filtervorrichtung mit einer Ringfilterelementanordnung aufweisend ein erfindungsgemäßes, inneres Ringfilterelement, das in einem äußeren Ringfilterelement aufgenommen ist, in einem schematischen Querschnitt, der gestuft verläuft, sodass eine Positioniervorrichtung am inneren Ringfilterelement und eine weitere Positioniervorrichtung zwischen den Ringfilterelementen sowie eine Gehäuse-Positioniervorrichtung am äußeren Ringfilterelement zu erkennen sind, obwohl sie an unterschiedlichen axialen Enden angeordnet sind;
- Fig. 8: einen vergrößerten Ausschnitt aus Figur 7;
- Fig. 9: einen Ausschnitt der Filtervorrichtung von Figur 7, in einem schematischen Längsschnitt, im Bereich der Positioniervorrichtung an einer offenen Endscheibe des inneren Ringfilterelements;
- Fig. 10: einen Ausschnitt der Filtervorrichtung von Figur 7, in einem schematischen Längsschnitt, im Bereich geschlossener Endscheiben mit der weiteren Positioniervorrichtung zwischen den beiden Ringfilterelementen und der Gehäuse-Positioniervorrichtung;
- Fig. 11: das erfindungsgemäße innere Ringfilterelement der Filtervorrichtung von Figur 7, in einer schematischen Perspektivansicht;
- Fig. 12: eine dritte Ausführungsform einer erfindungsgemäßen Filtervorrichtung mit einer Ringfilterelementanordnung aufweisend ein erfindungsgemäßes, inneres Ringfilterelement, das in einem äußeren Ringfilterelement aufgenommen ist, in einem schematischen Längsschnitt;
- Fig. 13: das innere Ringfilterelement der Filtervorrichtung von Figur 12, in einer schematischen Perspektivansicht;
- Fig. 14: eine vierte Ausführungsform einer erfindungsgemäßen Filtervorrichtung mit einer Ringfilterelementanordnung aufweisend ein erfindungsgemäßes, inneres Ringfilterelement, das in einem äußeren Ringfilterelement aufgenommen ist, in einem schematischen Querschnitt, der gestuft verläuft, sodass eine Positioniervorrichtung am inneren Ringfilterelement und eine Gehäuse-Positioniervorrichtung am äußeren Ringfilterelement zu erkennen sind, obwohl sie an unterschiedlichen axialen Enden angeordnet sind;
- Fig. 15: eine fünfte Ausführungsform einer erfindungsgemäßen Filtervorrichtung mit einer Ringfilterelementanordnung aufweisend ein erfindungsgemäßes, inneres Ringfilterelement, das in einem erfindungsgemäßen, äußeren Ringfilterelement aufgenommen ist, in einem schematischen Längsschnitt;
- Fig. 16: die Filtervorrichtung von Figur 15, in einem schematischen Längsschnitt mit gegenüber Figur 15 um 90° gedrehter Schnittebene;
- Fig. 17: eine sechste Ausführungsform einer erfindungsgemäßen Filtervorrichtung mit einer Ringfilterelementanordnung aufweisend ein erfindungsgemäßes, inneres Ringfilterelement, das in einem äußeren Ringfilterelement aufgenommen ist, in einem schematischen Längsschnitt;
- Fig. 18: die Filtervorrichtung von Figur 17, in einem schematischen Längsschnitt mit gegenüber Figur 15 um 90° gedrehter Schnittebene;
- Fig. 19: eine siebte Ausführungsform einer erfindungsgemäßen Filtervorrichtung, in einer schematischen Perspektivansicht;
- Fig. 20: eine schematische Schnittansicht durch die Filtervorrichtung von Figur 19, wobei ein in einem Filtergehäuse angeordnetes erfindungsgemäßes Ringfilterelement zu erkennen ist;
- Fig. 21: das Ringfilterelement der Filtervorrichtung von Figur 20, in einer schematischen Perspektivansicht;
- Fig. 22: eine Prinzipskizze des Querschnitts eines erfindungsgemäßen Ringfilterelements mit mehreren, nicht drehsymmetrisch angeordneten Faltenaufspreizungen;
- Fig. 23: eine Prinzipskizze einer offenen Endscheibe für ein erfindungsgemäßes Ringfilterelement, wobei die Endscheibe eine sich nach radial außen erweiternden Aussparung aufweist;
- Fig. 24: eine Prinzipskizze einer offenen Endscheibe für ein erfindungsgemäßes Ringfilterelement, wobei die Endscheibe eine sich nach radial außen erweiternden Aussparung aufweist;
- Fig. 25: ein weiteres erfindungsgemäßes Ringfilterelement, wobei eine offene Endscheibe Stützsegmente für innenliegende Faltenaufspreizungen aufweist, in einer schematischen Perspektivansicht;
- Fig. 26: eine achte Ausführungsform einer erfindungsgemäßen Ringfilteranordnung mit einem erfindungsgemäßen Ringfilterelement, wobei ein in das Ringfilterelement eingreifendes Stützrohr radial außen ein weiteres Ringfilterelement trägt, in einem schematischen Querschnitt;
- Fig. 27: das Stützrohr der Filtervorrichtung von Figur 26, in einer schematischen Perspektivansicht;
- Fig. 28: eine Prinzipskizze einer erfindungsgemäßen Verwendung einer erfindungsgemäßen Filtervorrichtung als Kathodenluftfilter einer Brennstoffzelle.

### Ausführungsformen der Erfindung

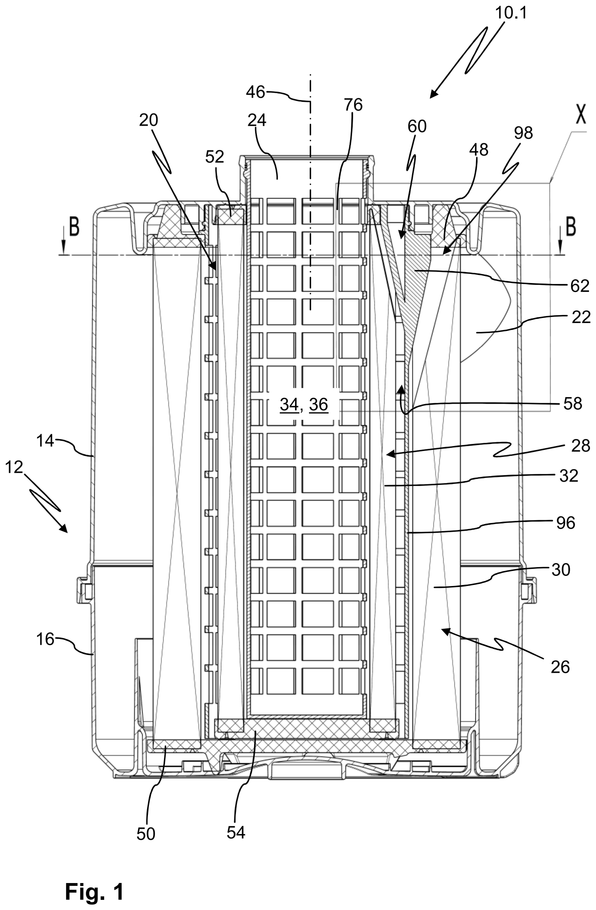

**Figur 1** zeigt eine Filtervorrichtung **10.1,** hier in Form eines Luftfilters. Ein Filtergehäuse **12** der Filtervorrichtung 10.1 weist ein Gehäuseoberteil **14** und ein Gehäuseunterteil **16** auf, welche lösbar aneinander befestigt sind. In dem Filtergehäuse 12 ist eine Ringfilterelementanordnung **20** aufgenommen. Die Ringfilterelementanordnung 20 trennt einen Fluideinlass **22** für ungefilterte Luft von einem Fluidauslass **24** für gefilterte Luft. Der Fluideinlass 22 und der Fluidauslass 24 sind hier beispielhaft an dem Gehäuseoberteil 14 ausgebildet.

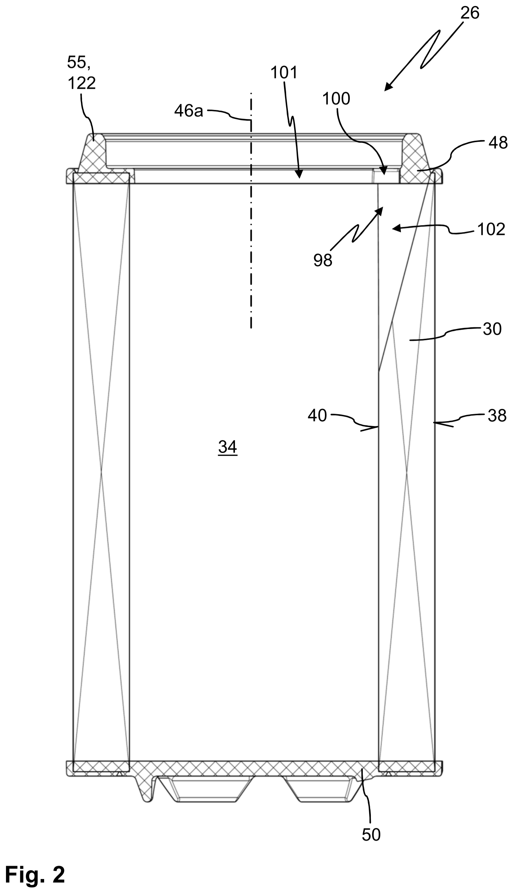

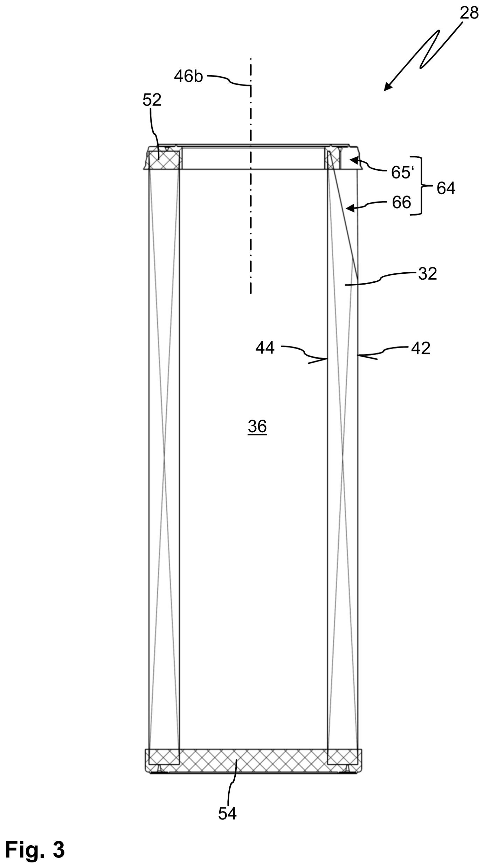

Die Ringfilterelementanordnung 20 umfasst ein erstes, hier äußeres, Ringfilterelement **26,** siehe auch **Figur 2,** und ein zweites, hier inneres, Ringfilterelement **28,** siehe auch **Figur 3****,** welche seriell von radial außen nach radial innen durchströmbar sind. Die beiden Ringfilterelemente 26, 28 weisen jeweils einen (ersten bzw. zweiten) Filtermediumkörper **30** bzw. **32** auf, der einen jeweiligen Innenraum **34** bzw. **36** einschließt. Die Filtermediumkörper 30, 32 sind hier jeweils hohlzylindrisch mit einem kreisringförmigen Querschnitt ausgebildet. Eine Außenmantelfläche des ersten Filtermediumkörpers 30 ist mit dem Bezugszeichen **38** versehen, eine Innenmantelfläche des ersten Filtermediumkörpers 30 ist mit dem Bezugszeichen **40** versehen. Eine Außenmantelfläche des zweiten Filtermediumkörpers 32 ist mit dem Bezugszeichen **42** versehen, eine Innenmantelfläche des zweiten Filtermediumkörper 32 ist mit dem Bezugszeichen **44** versehen.

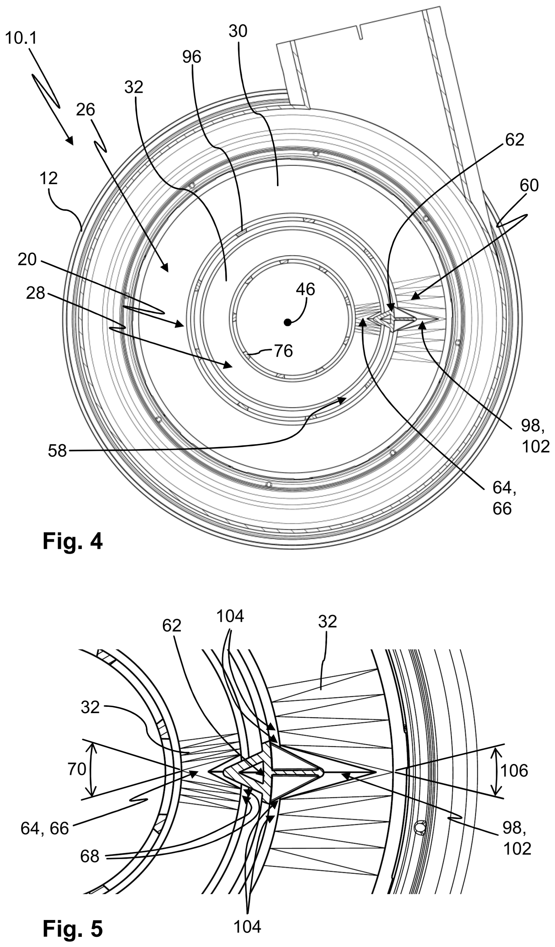

Im montierten Zustand sind die beiden Ringfilterelement 26, 28 koaxial zueinander angeordnet, vgl. Figur 1 und **Figur 4****.** Sich durch die jeweiligen Innenräume 34, 36 erstreckende Längsachsen **46a, 46b** der Filtermediumkörper 30, 32 fallen in einer gemeinsamen Längsachse **46** zusammen.

Die beiden Filtermediumkörper 30, 32 sind hier jeweils als ein Faltenbalg ausgebildet, welcher durch sternförmiges Falten eines flächigen Filtermediums erhalten ist. In Figur 4 sind einige der jeweiligen Falten dargestellt. Das Filtermedium insbesondere des in Durchströmungsrichtung nachgeschalteten, inneren Ringfilterelements 28 kann ein Adsorbens, beispielsweise Aktivkohle, enthalten, um Schadgase aus dem zu filternden Luftstrom zu entfernen.

Axiale Stirnseiten der beiden Filtermediumkörper 30, 32 sind jeweils durch eine Endscheibe **48, 50**, **52, 54** abgedichtet. Vorliegend sind einenends jeweils geschlossene Endscheiben 50, 54 vorgesehen. Anderenends sind jeweils offene Endscheiben 48, 52 vorgesehen, um zum einen das Einführen des inneren Ringfilterelements 28 in das äußere Ringfilterelement 26 zu ermöglichen, und um zum anderen den Austritt von gefilterter Luft durch den Fluidauslass 24 zu ermöglichen. Hier liegen die offenen Endscheiben 48, 52 im montierten Zustand jeweils dichtend an dem Gehäuseoberteil 14 an. Eine Dichtung **55** an der offenen Endscheibe 48 des ersten Ringfilterelements 26 ist mit einem in axialer Richtung vorstehenden Dichtwulst **122** gebildet.

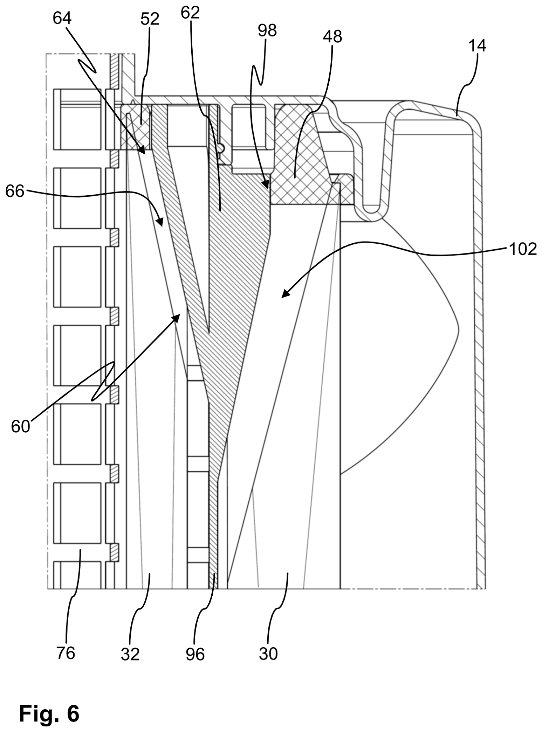

Bei der Filtervorrichtung 10.1 ist ein an dem Filtergehäuse 12 befestigtes Stützrohr **96** vorgesehen, welches sich zwischen die beiden Ringfilterelemente 26, 28 erstreckt, vgl. Figuren 1 und 4. Der Bereich zwischen der Innenmantelfläche 40 des ersten Filtermediumkörpers 30 und der Außenmantelfläche 42 des zweiten Filtermediumkörpers 32 wird im Rahmen der vorliegenden Erfindung auch als ein Schnittstellenbereich **58** bezeichnet. Das Stützrohr 96 kann beispielsweise in einer feststehenden Winkelposition mit dem Gehäuseoberteil 14 verrastet sein, vgl. insbesondere **Figur 6****.** Diese Winkelposition kann durch den Eingriff eines gehäusefesten Axialvorsprungs in eine stirnseitige Ausnehmung am Stützrohr definiert sein (nicht näher dargestellt). Die beiden Ringfilterelemente 26, 28 können zur Montage auf das Stützrohr 96 aufgeschoben bzw. in das Stützrohr 96 eingeschoben werden und zur Demontage vom Stützrohr 96 abgezogen werden.

Zwischen dem ersten und dem zweiten Ringfilterelement 26, 28 wirkt eine Positioniervorrichtung **60**, welche die beiden Ringfilterelemente 26, 28 relativ zueinander in einer definierten Winkelposition (Drehstellung) bezüglich der Längsachse 46 hält, vgl. Figuren 1 und 4. Die Positioniervorrichtung 60 weist ein Eingriffselement **62** auf, welches in dem Schnittstellenbereich 58 zwischen den beiden Ringfilterelementen 26, 28 angeordnet ist, vgl. auch **Figur 5** sowie Figur 6.

Einerseits ragt das Eingriffselement 62 nach radial außen in ein Gegeneingriffselement **98** des ersten Ringfilterelements 26. Hierdurch ist eine Winkelposition des ersten Ringfilterelements 26 bezüglich der Längsachse 46 relativ zum Filtergehäuse 12 fixiert. Das Eingriffselement 62 ragt anderseits nach radial innen in ein (zweites) Gegeneingriffselement **64** des zweiten Ringfilterelements 28. Hierdurch ist eine Winkelposition des zweiten Ringfilterelements 28 bezüglich der Längsachse 46 relativ zum Filtergehäuse 12 fixiert. Da das Eingriffselement 62 des Stützrohrs 96 in die Gegeneingriffselemente 64, 98 beider Filterelemente 26, 28 eingreift, sind diese auch relativ zueinander bezüglich der Längsachse 46 in einer definierten Winkelposition fixiert; dies gilt auch, wenn das Stützrohr drehbar am Filtergehäuse 12 gehalten sein sollte.

Das Gegeneingriffselement 98 des ersten Ringfilterelement 26 umfasst eine Aussparung **100**, die an der offenen Endscheibe 48 radial innen ausgebildet ist, vgl. auch Figur 2. Zudem umfasst das Gegeneingriffselement 98 eine mit der Aussparung 100 fluchtende Faltenaufspreizung **102** an der Innenmantelfläche 40 des ersten Filtermediumkörpers 30. Hier erstreckt sich die Faltenaufspreizung 88 nicht über die gesamte axiale Länge des ersten Filtermediumkörpers 30, sondern beschränkt sich auf weniger als ein Drittel dessen gesamter Länge. Bei einer nicht näher dargestellten Ausführungsform könnte sich die Faltenaufspreizung über die gesamte Länge des ersten Filtermediumkörpers 30 von der offenen Endscheibe 48 bis zur geschlossenen Endscheibe 50 erstrecken.

Die Aussparung 100 ist hier nach radial innen offen. Mit anderen Worten geht die Aussparung 100 unmittelbar in eine zentrale Öffnung **101** der offenen Endscheibe 48 über. Die Aussparung 100 kann somit auch als eine Ausbauchung im Rand der zentralen Öffnung 101 angesehen werden. Die zentrale Öffnung 101 einschließlich der Aussparung 100 sind außenseitig von dem Dichtwulst 122 umgeben.

Im Bereich der Faltenaufspreizung 102 ist ein in Umfangsrichtung gemessener Faltenabstand zwischen radial inneren Falzkanten **104** des ersten Filtermediumkörpers 30 gegenüber dem Faltenabstand angrenzender, innerer Falzkanten 104 vergrößert, vgl. insbesondere **Figur 5****.** Hier beschränkt sich die Faltenaufspreizung 102 auf eine einzige nach innen offene Falte. Durch die Faltenaufspreizung 102 ist auch ein Faltenwinkel 106 gegenüber den angrenzenden Falten vergrößert.

Das Gegeneingriffselement 64 des inneren Ringfilterelements 28 ist durch eine Aussparung **65'** in der offenen Endscheibe 52 (vgl. insbesondere Figur 3) sowie eine Faltenaufspreizung **66** an der Außenmantelfläche 42 des sternförmig gefalteten Filtermediumkörpers 32 (vgl. insbesondere Figur 5) gebildet. Die Aussparung 65 und die Faltenaufspreizung 66 fluchten miteinander, vgl. insbesondere Figur 3.

Im Bereich der Faltenaufspreizung 66 ist ein in Umfangsrichtung gemessener Faltenabstand zwischen radial äußeren Falzkanten **68** des zweiten Filtermediumkörpers 32 gegenüber dem Faltenabstand angrenzender, äußerer Falzkanten 68 vergrößert. Hier beschränkt sich die Faltenaufspreizung 66 auf eine einzige nach außen offene Falte. Durch die Faltenaufspreizung 66 ist auch ein Faltenwinkel **70** gegenüber den angrenzenden Falten vergrößert. Vorliegend erstreckt sich die Faltenaufspreizung 66 nicht über die gesamte axiale Länge des zweiten Filtermediumkörpers 32, sondern beschränkt sich auf weniger als ein Drittel dessen gesamter Länge. Bei einer nicht näher dargestellten Ausführungsform könnte sich die Faltenaufspreizung über die gesamte Länge des zweiten Filtermediumkörpers 32 von der offenen Endscheibe 52 bis zur geschlossenen Endscheibe 54 erstrecken.

Ein gehäusefest anordenbares, beispielsweise mit dem Gehäuseoberteil 14 verrastbares, Zentralrohr **76** kann das zweite Ringfilterelement 28 an dessen Innenmantelfläche 44 nach radial innen abstützen, vgl. Figur 1.

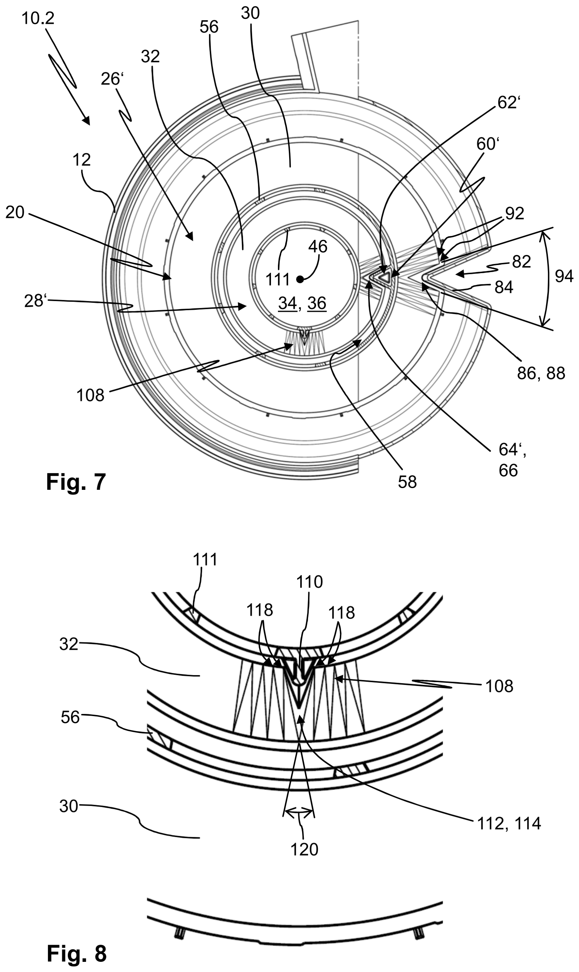

**Figur 7** zeigt eine zweite Filtervorrichtung **10.2.** Die Filtervorrichtung 10.2 von Figur 7 entspricht in vielen Aspekten der in den Figuren 1 bis 6 gezeigten und oben beschriebenen Filtervorrichtung 10.1. Nachfolgend werden vorrangig die Unterschiede erläutert; im Übrigen sei auf die vorstehende Beschreibung verwiesen.

Die Filtervorrichtung 10.2 weist eine Ringfilterelementanordnung 20 mit einem ersten, hier inneren, Ringfilterelement 28' und einem äußeren Ringfilterelement **26'** auf. Die Ringfilterelemente 26', 28' sind koaxial zu einer gemeinsamen Längsachse 46 in einem Filtergehäuse 12 angeordnet. Ein Filtermediumkörper 32 des ersten, inneren Ringfilterelements 28' ist außenseitig vom Filtermediumkörper 30 des äußeren Ringfilterelements 26' umgeben; der Filtermediumkörper 32 ist mit anderen Worten in einem Innenraum 34 des Filtermediumkörpers 30 aufgenommen.

Auch hier sind die Filtermediumkörper 30, 32 der beiden Ringfilterelemente 26', 28' durch sternförmig gefaltete Filterbälge gebildet. Die Ringfilterelemente 28', 26' der Ringfilterelementanordnung 20 sind seriell von radial außen nach radial innen durchströmbar. Der Filtermediumkörper 30 des äußeren Ringfilterelements 26' wird daher auch als erster Filtermediumkörper bezeichnet; der Filtermediumkörper 32 des ersten, inneren Ringfilterelements 28' wird entsprechend auch als zweiter Filtermediumkörper bezeichnet.

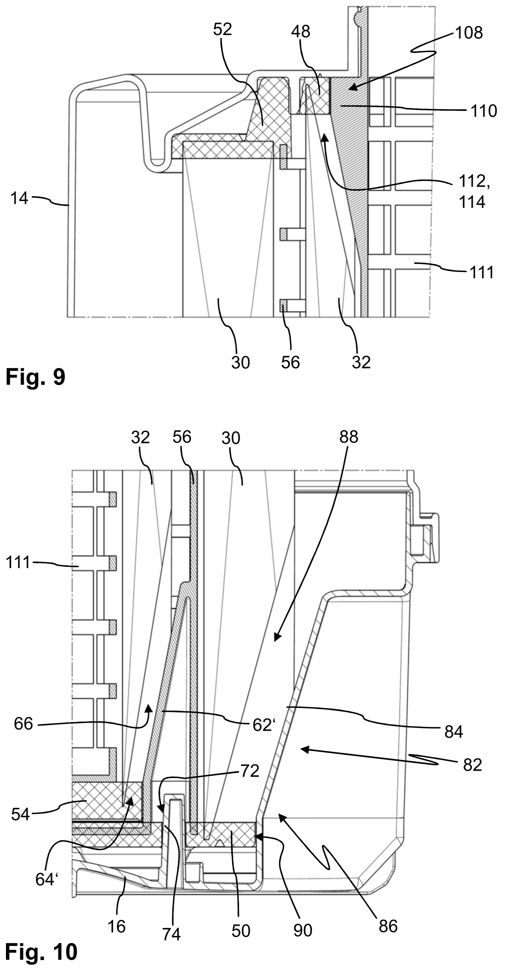

Bei der Filtervorrichtung 10.2 ist eine Positioniervorrichtung **108** vorgesehen, welche das erste, innere Ringfilterelement 28' relativ zum Filtergehäuse 12 in einer definierten Winkelposition bezüglich der Längsachse 46 ausrichtet. Die Positioniervorrichtung 108 weist ein Eingriffselement **110** auf, vgl. auch **Figuren 8** und **9****.** Das Eingriffselement 110 ist in Form eines nach radial außen weisenden Vorsprungs an einem gehäusefesten Stützrohr **111** ausgebildet. Das Stützrohr 111 kann in einer definierten Winkelposition mit dem Gehäuseoberteil 14 verrastet sein.

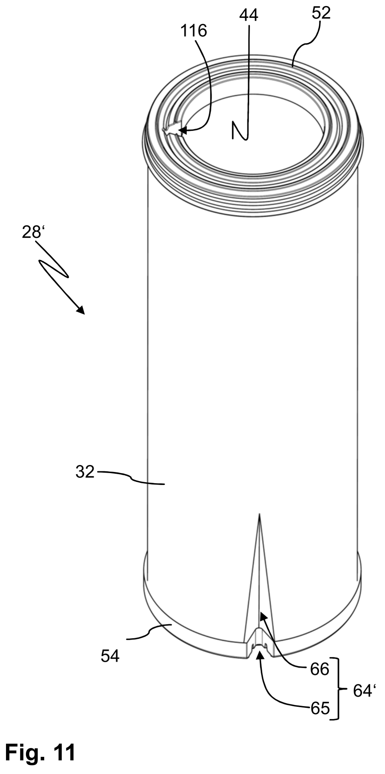

Das Eingriffselement 110 greift in ein Gegeneingriffselement **112** am zweiten Ringfilterelement 28' ein. Das Gegeneingriffselement 112 umfasst eine Faltenaufspreizung **114** an der Innenmantelfläche 44 des zweiten Filtermediumkörpers 32 (vgl. insbesondere Figur 8) sowie eine Aussparung **116** radial innen an dessen offener Endscheibe 52, vgl. **Figur 11****.** Hier erstreckt sich die Faltenaufspreizung 88 nicht über die gesamte axiale Länge des ersten Filtermediumkörpers 30, sondern beschränkt sich auf weniger als ein Viertel dessen gesamter Länge, vgl. Figur 9.

Im Bereich der Faltenaufspreizung 114 ist ein in Umfangsrichtung gemessener Faltenabstand zwischen radial inneren Falzkanten **118** des zweiten Filtermediumkörpers 32 gegenüber dem Faltenabstand angrenzender, innerer Falzkanten 118 vergrößert, vgl. Figur 8. Hier beschränkt sich die Faltenaufspreizung 114 auf eine einzige nach innen offene Falte. Durch die Faltenaufspreizung 114 ist auch ein Faltenwinkel **120** gegenüber den angrenzenden Falten vergrößert.

Bei der Filtervorrichtung 10.2 ist zudem eine weitere Positioniervorrichtung 60' zwischen den beiden Ringfilterelementen 26', 28' mit einem weiteren Eingriffselement 62' in Form eines nach radial innen weisenden Vorsprungs an einem mit dem äußeren Ringfilterelement 26' fest verbundenen Innenrohr **56** gebildet, vgl. auch **Figur 10****.** Das weitere Eingriffselement 62' greift in ein weiteres Gegeneingriffselement **64'** am ersten, inneren Ringfilterelement 28' ein, welches auch hier mit einer Faltenaufspreizung 66 an der Außenmantelfläche 42 des zweiten Filtermediumkörpers 32 gebildet ist (vgl. insofern auch Figur 5). Zudem weist das weitere Gegeneingriffselement 64' eine mit der Faltenaufspreizung 66 fluchtende Aussparung **65** an der geschlossenen Endscheibe 54 auf, vgl. **Figur 11****.** Das weitere Gegeneingriffselement 64' kann in Umfangsrichtung gegenüber dem Gegeneingriffselement 112 versetzt sein, beispielsweise um 90°, vgl. auch Figur 7.

Bei der Filtervorrichtung 10.2 weist das Eingriffselement 62' stirnseitig (im Bereich der Endscheibe 50) eine Ausnehmung **72** auf, vgl. Figur 10. Auch die im Übrigen geschlossene Endscheibe 50 ist im Bereich der Ausnehmung 72 durchbrochen. Das weitere Eingriffselement 62' ist jedoch fluiddicht geschlossen und dichtend in die Endscheibe 54 eingebettet, sodass das äußere Ringfilterelement 26' unterenends abgedichtet bleibt.

Ein gehäusefester Axialvorsprung **74,** welcher hier einstückig mit dem Gehäuseunterteil 16 ausgebildet ist, greift in die Ausnehmung 72 des weiteren Eingriffselements 62' ein. Mit anderen Worten erstreckt sich der Axialvorsprung 74 durch die Endscheibe 54 hindurch in das hohle Eingriffselement 62' hinein.

Durch den Eingriff des Axialvorsprungs 74 in die Ausnehmung 72 des weiteren Eingriffselements 62' wird eine definierte Winkelposition des äußeren Ringfilterelements 26' gegenüber dem Filtergehäuse 12 eingerichtet. Über den Eingriff des weiteren Eingriffselements 62' in das weitere Gegeneingriffselement 64' des ersten, inneren Ringfilterelements 28' ist somit auch das erste Ringfilterelement 28' (mittelbar über das äußere Ringfilterelement 26') relativ zum Filtergehäuse 12 winkelpositioniert. Das fest mit dem äußeren Ringfilterelement 26' verbundene weitere Eingriffselement 62' bewirkt somit eine Winkelpositionierung der beiden Ringfilterelemente 26', 28' der Ringfilterelementanordnung 20 relativ zueinander wie auch der Ringfilterelementanordnung 20 insgesamt gegenüber dem Filtergehäuse 12.

Bei der Filtervorrichtung 10.2 ist ferner eine Gehäuse-Positioniervorrichtung **82** vorgesehen, welche das äußere Ringfilterelement 26' relativ zum Filtergehäuse 12 in einer definierten Winkelposition bezüglich der Längsachse 46 ausrichtet, vgl. Figuren 7 und 10. Die Gehäuse-Positioniervorrichtung 82 weist ein Gehäuse-Eingriffselement **84** auf, das in Form einer keilförmigen Rippe ausgebildet ist, welche beispielhaft einstückig mit dem Gehäuseunterteil 16 sein kann. Das Gehäuse-Eingriffselement 84 verjüngt sich nach oben hin und steht nach oben hin weniger weit nach radial innen vor. In axialer Richtung beschränkt sich die Höhe des ersten Gehäuse-Eingriffselements 84 auf weniger als ein Viertel der Länge des ersten Filtermediumkörpers 30.

Das Gehäuse-Eingriffselement 84 greift in ein Gehäuse-Gegeneingriffselement **86** am ersten Ringfilterelement 26' ein. Das Gehäuse-Gegeneingriffselement 86 umfasst eine Faltenaufspreizung **88** an der Außenmantelfläche 38 des ersten Filtermediumkörpers 30 sowie eine Aussparung **90** in dessen geschlossener Endscheibe 50, vgl. Figuren 7 und 10. Hier erstreckt sich die Faltenaufspreizung 88 nicht über die gesamte axiale Länge des ersten Filtermediumkörpers 30, sondern beschränkt sich auf weniger als ein Drittel dessen gesamter Länge.

Im Bereich der Faltenaufspreizung 88 ist ein in Umfangsrichtung gemessener Faltenabstand zwischen radial äußeren Falzkanten **92** des ersten Filtermediumkörpers 30 gegenüber dem Faltenabstand angrenzender, äußerer Falzkanten 92 vergrößert. Hier beschränkt sich die Faltenaufspreizung 88 auf eine einzige nach außen offene Falte. Durch die Faltenaufspreizung 88 ist auch ein Faltenwinkel **94** gegenüber den angrenzenden Falten vergrößert.

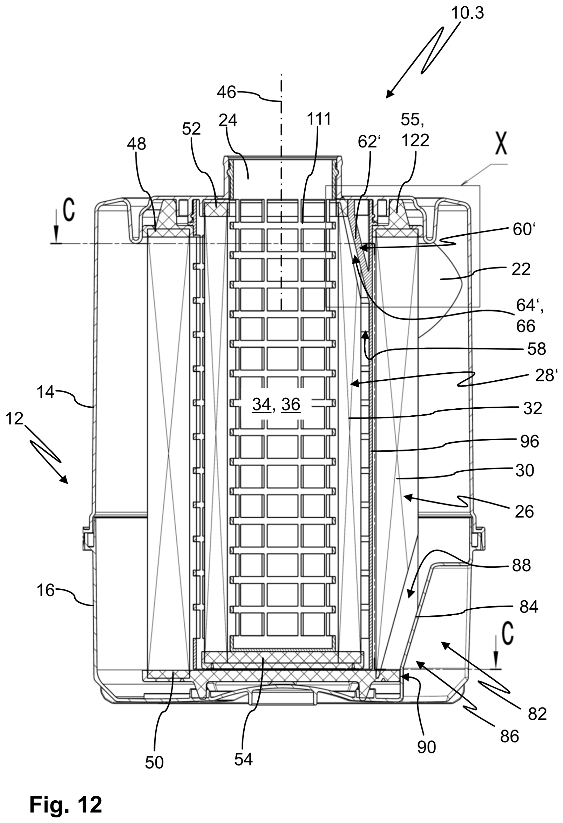

**Figur 12** zeigt eine dritte Filtervorrichtung **10.3.** Die Filtervorrichtung 10.3 von Figur 12 entspricht in vielen Aspekten der in Figuren 7 bis 11 gezeigten und oben beschriebenen Filtervorrichtung 10.2. Nachfolgend werden vorrangig die Unterschiede erläutert; im Übrigen sei auf die vorstehende Beschreibung verwiesen.

Die Filtervorrichtung 10.3 weist - wie die Filtervorrichtung 10.2 - eine Positioniervorrichtung 108 auf, welche ein erstes, inneres Ringfilterelement 28' relativ zum Filtergehäuse 12 in einer definierten Winkelposition bezüglich einer Längsachse 46 ausrichtet, indem ein Eingriffselement 110 eines gehäusefesten Stützrohrs 111 in ein Gegeneingriffselement 112 eingreift, wobei das Gegeneingriffselement 112 mit einer Aussparung 116 am Innenumfang der Endscheibe 52 und einer angrenzenden Faltenaufspreizung 114 gebildet ist (in Figur 12 liegt die Positioniervorrichtung 108 vor der Zeichenebene und ist daher nicht zu erkennen, vgl. insofern Figur 9). Ebenfalls wie bei der Filtervorrichtung 10.2 ist bei der Filtervorrichtungen 10.3 eine Gehäuse-Positioniervorrichtung 82 vorgesehen, welche ein äußeres Ringfilterelement 26' relativ zum Filtergehäuse 12 winkelpositioniert, indem ein Gehäuse-Eingriffselement 84 in ein Gehäuse-Gegeneingriffselement 86 eingreift, wobei das Gehäuse-Gegeneingriffselement 86 mit einer Aussparung 90 am Außenumfang der Endscheibe 50 und einer angrenzenden Faltenaufspreizung 88 gebildet ist.

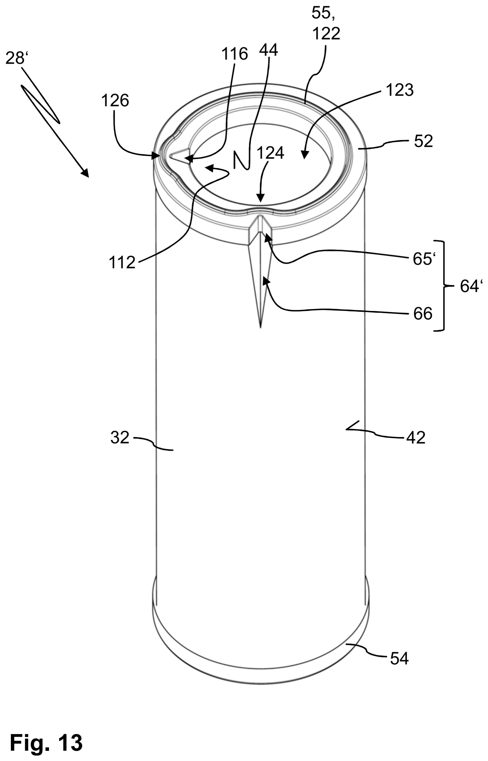

Eine weitere Positioniervorrichtung 60' ist bei der Filtervorrichtungen 10.3 - anders als bei der Filtervorrichtung 10.2 - im Bereich der offenen Endscheibe 48 des ersten, inneren Ringfilterelements 28' angeordnet. Bei der dargestellten Ausführungsform ist ein weiteres Eingriffselement 62' der weiteren Positioniervorrichtung 60' in Form eines nach radial innen weisenden Vorsprungs an einem gehäusefesten Stützrohr 96 gebildet. Alternativ könnte das weitere Eingriffselement 62' an einem an dem äußeren Ringfilterelement 26' befestigten Innenrohr vorgesehen sein (nicht näher dargestellt, vgl. insofern Figuren 9 und 10). Das weitere Eingriffselement 62' greift nach radial innen in ein weiteres Gegeneingriffselement 64' am ersten, inneren Ringfilterelement 28' ein, welches auch hier mit einer Faltenaufspreizung 66 an der Außenmantelfläche 42 des zweiten Filtermediumkörpers 32 gebildet ist (vgl. insofern auch Figur 5). Zudem weist das weitere Gegeneingriffselement 64' eine mit der Faltenaufspreizung 66 fluchtende Aussparung 65' an der offenen Endscheibe 52 auf, vgl. **Figur 13****.** Das weitere Gegeneingriffselement 64' ist in Umfangsrichtung gegenüber dem Gegeneingriffselement 112 versetzt, beispielsweise um 90°.

Das Ringfilterelement 28' weist an der offenen Endscheibe 52 eine Dichtung 55 in Form eines axialen vorstehenden Dichtwulsts 122 auf. Der Dichtwulst 122 umgibt außenseitig eine zentrale Öffnung **123** einschließlich der innenseitigen Aussparung 116, welche zu der zentralen Öffnung 123 hin offen ist. An der außenseitigen Aussparung 65' verläuft der Dichtwulst 122 radial innen vorbei. Die Dichtung 55 weist im Bereich der Aussparungen 65' und 116 eine Einbuchtung **124** nach radial innen bzw. eine Ausbuchtung **126** nach radial außen auf. Insofern weicht der im Übrigen kreisförmige Dichtwulst 122 in diesen Bereichen von der Kreisform ab.

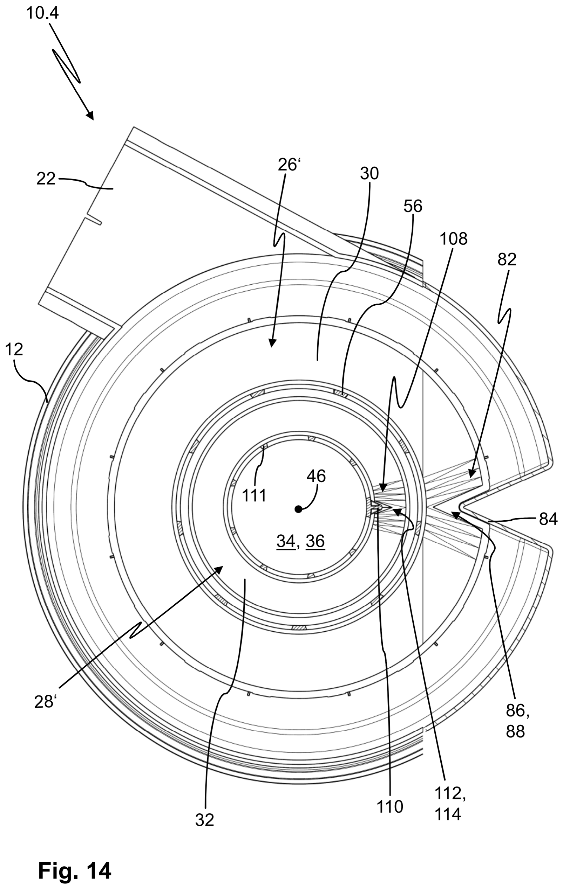

**Figur 14** zeigt eine vierte Filtervorrichtung **10.4.** Die Filtervorrichtung 10.4 von Figur 14 entspricht in vielen Aspekten der in den Figuren 7 bis 11 gezeigten und oben beschriebenen Filtervorrichtung 10.2. Nachfolgend werden vorrangig die Unterschiede erläutert; im Übrigen sei auf die vorstehende Beschreibung verwiesen.

Die Filtervorrichtung 10.4 weist - wie die Filtervorrichtung 10.2 - eine Positioniervorrichtung 108 auf, welche ein erstes, inneres Ringfilterelement 28' relativ zum Filtergehäuse 12 in einer definierten Winkelposition bezüglich einer Längsachse 46 ausrichtet, indem ein Eingriffselement 110 in ein Gegeneingriffselement 112 eingreift, wobei das Gegeneingriffselement 112 mit einer Aussparung 116 am Innenumfang der Endscheibe 52 und einer angrenzenden Faltenaufspreizung 114 gebildet ist. Ein Stützrohr 111, an welchem das Eingriffselement 110 ausgebildet ist, kann in einer definierten Winkelposition mit dem Gehäuseoberteil 14 verrastet sein, vgl. insofern Figur 9.

Ebenfalls wie bei der Filtervorrichtung 10.2 ist bei der Filtervorrichtungen 10.4 eine Gehäuse-Positioniervorrichtung 82 vorgesehen, welche ein äußeres Ringfilterelement 26' relativ zum Filtergehäuse 12 winkelpositioniert, indem ein Gehäuse-Eingriffselement 84 in ein Gehäuse-Gegeneingriffselement 86 eingreift, wobei das Gehäuse-Gegeneingriffselement 84 mit einer Aussparung 90 am Außenumfang der Endscheibe 50 und einer angrenzenden Faltenaufspreizung 88 gebildet ist, vgl. insofern auch Figuren 7 und 10.

Ein Innenrohr 56 des äußeren Ringfilterelements 26' stützt dessen Filtermediumkörper 30 nach radial innen ab. Bei der Filtervorrichtung 10.4 ist das Innenrohr 56 nicht an der Winkelpositionierung der Ringfilterelemente 26', 28' beteiligt.

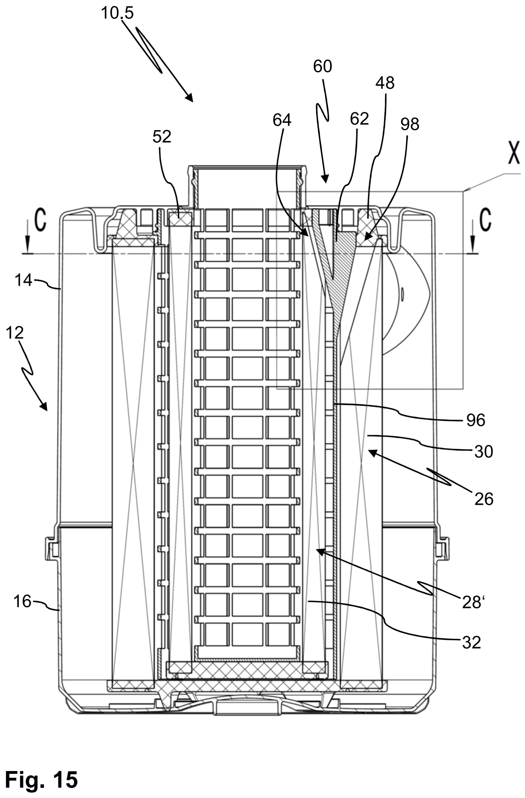

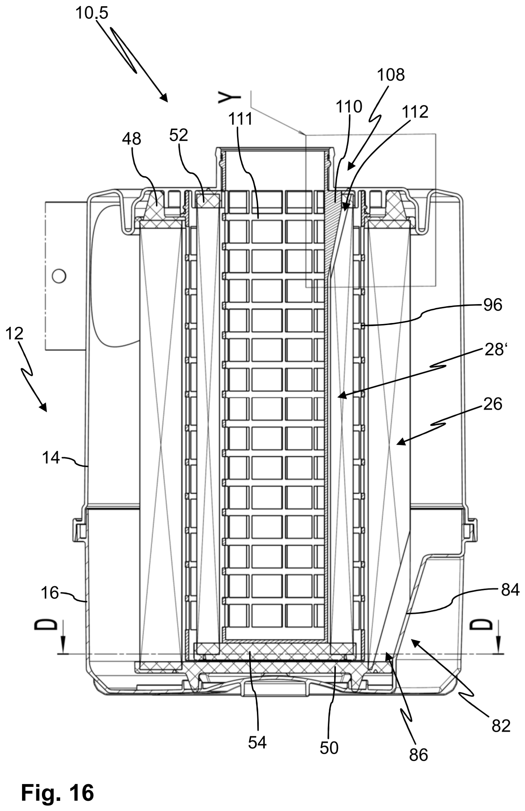

**Figuren 15** und **16** zeigen eine fünfte Filtervorrichtung **10.5.** Die Filtervorrichtung 10.5 von Figur 15 und 16 entspricht in vielen Aspekten der in den Figuren 1 bis 6 gezeigten und oben beschriebenen Filtervorrichtung 10.1. Nachfolgend werden vorrangig die Unterschiede erläutert; im Übrigen sei auf die vorstehende Beschreibung verwiesen.

Auch bei der Filtervorrichtung 10.5 ist eine zwischen zwei koaxialen Ringfilterelementen 26, 28' wirkende Positioniervorrichtung 60 vorgesehen vgl. Figur 15. Ein Eingriffselement 62, welches an einem gehäusefesten Stützrohr 96 ausgebildet ist, greift nach radial außen in ein korrespondierendes Gegeneingriffselement 98 an einer offenen Endscheibe 48 des äußeren Ringfilterelements 26 ein. Das Gegeneingriffselement 98 ist mit einer innenseitigen Faltenaufspreizung 102 am sternförmig gefalteten Filtermediumkörper 30 und einer dazu fluchtenden Aussparung 100 am Innenumfang der Endscheibe 48 gebildet, vgl. insofern auch Figuren 2 und 5. Zudem greift das Eingriffselement 62 nach radial innen in ein korrespondierendes Gegeneingriffselement 64 an einer offenen Endscheiben 52 des zweiten Ringfilterelements 28' ein, vgl. insofern auch Figuren 3 und 5.

Ferner weist die Filtervorrichtung 10.5 eine (zweite) Positioniervorrichtung 108 auf, vgl. Figur 16. Wie bei der Filtervorrichtung 10.2 greift ein Eingriffselement 110, das an einem an dem Gehäuseoberteil 16 befestigten Stützrohr 111 ausgebildet ist, nach radial außen in ein korrespondierendes, nach radial innen offenes Gegeneingriffselement 112 im Bereich der offenen Endscheibe 52 des inneren Ringfilterelements 28' ein; insofern sei auf die obige Beschreibung und die Figuren 7, 8 und 9 verwiesen. Das zweite Ringfilterelement 28' der Filtervorrichtung 10.5 entspricht dem in Figur 13 gezeigten und oben beschriebenen Ringfilterelement 28'.

Weiterhin weist die Filtervorrichtung 10.5 eine Gehäuse-Positioniervorrichtung 82 auf, vgl. Figur 16. Wie bei den Filtervorrichtungen 10.2, 10.3 und 10.4 greift ein am Gehäuseunterteil 16 ausgebildetes Gehäuse-Eingriffselement 84 nach radial innen in ein korrespondierendes, nach radial außen offenes Gehäuse-Gegeneingriffselement 86 im Bereich der geschlossenen Endscheibe 50 des ersten Ringfilterelements 26 ein; insofern sei auf die obige Beschreibung und Figuren 7 und 10 verwiesen.

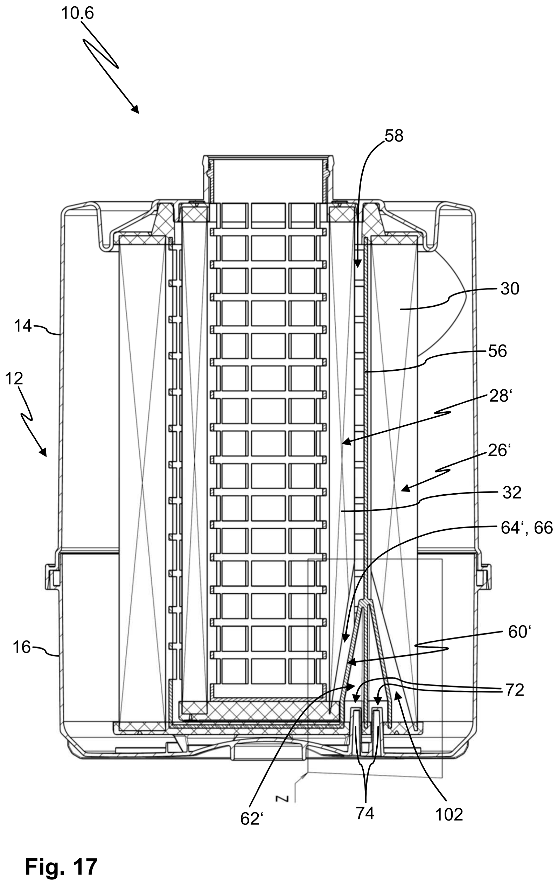

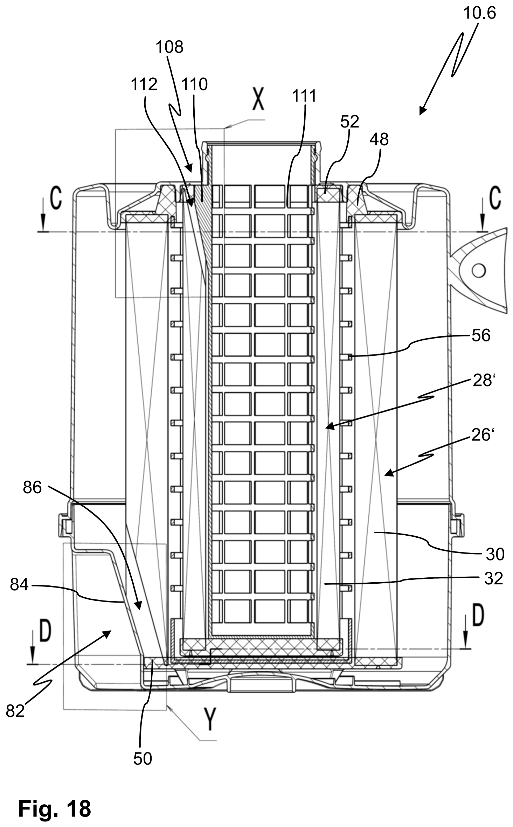

**Figuren 17** und **18** zeigen eine sechste Filtervorrichtung **10.6,** die in vielen Aspekten der Filtervorrichtung 10.2 von Figur 7 entspricht. Nachfolgend werden vorrangig die Unterschiede erläutert; im Übrigen sei auf die vorstehende Beschreibung verwiesen.

Die Filtervorrichtung 10.6 weist eine Positioniervorrichtung 108 auf, vgl. Figur 18. Wie bei der Filtervorrichtung 10.2 greift ein am Gehäuseoberteil 14 angeordnetes Eingriffselement 110, das an einem an dem Gehäuseoberteil 16 befestigten Stützrohr 111 ausgebildet ist, nach radial außen in ein korrespondierendes, nach radial innen offenes Gehäuse-Gegeneingriffselement 112 im Bereich einer offenen Endscheibe 52 eines inneren Ringfilterelements 28' ein; insofern sei auf die obige Beschreibung und die Figuren 7, 8 und 9 verwiesen. Das Ringfilterelement 28' der Filtervorrichtung 10.6 entspricht dem in Figur 11 gezeigten und oben beschriebenen Ringfilterelement 28'.

Eine weitere Positioniervorrichtung 60' zwischen dem inneren Ringfilterelement 28' und einem äußeren Ringfilterelement 26' ist mit einem Eingriffselement 62' in Form eines nach radial innen weisenden Vorsprungs an einem mit dem äußeren Ringfilterelement 26' fest verbundenen Innenrohr 56 gebildet, vgl. Figur 17. Das Eingriffselement 62' greift in ein Gegeneingriffselement 64' am inneren Ringfilterelement 28' ein, welches auch hier mit einer Faltenaufspreizung 66 an der Außenmantelfläche 42 des zweiten Filtermediumkörpers 32 gebildet ist (vgl. insofern auch Figur 5). An dem Eingriffselement 62' ist zudem ein nach radial außen weisender Vorsprung ausgebildet, welcher in eine Faltenaufspreizung 102 an der Innenmantelfläche 40 des ersten Filtermediumkörpers 30 eingreift. Das Eingriffselement 62' ist mit zwei stirnseitigen Ausnehmungen **72** versehen, von denen jeweils eine den nach innen bzw. außen vom Innenrohr 56 abragenden Vorsprung eröffnet. In jede der Ausnehmungen 72 greift je ein Axialvorsprung **74** des Filtergehäuses 12 ein. Hier sind die Axialvorsprünge 74 einstückig mit dem Gehäuseunterteil 16.

Zudem weist die Filtervorrichtung 10.6 eine Gehäuse-Positioniervorrichtung 82 auf, vgl. Figur 18. Wie bei der Filtervorrichtung 10.2 greift ein am Gehäuseunterteil 16 ausgebildetes erstes Gehäuse-Eingriffselement 84 nach radial innen in ein korrespondierendes, nach radial außen offenes Gehäuse-Gegeneingriffselement 86 im Bereich der geschlossenen Endscheibe 50 des ersten Ringfilterelements 26' ein; insofern sei auf die obige Beschreibung und die Figuren 7 und 10 verwiesen.

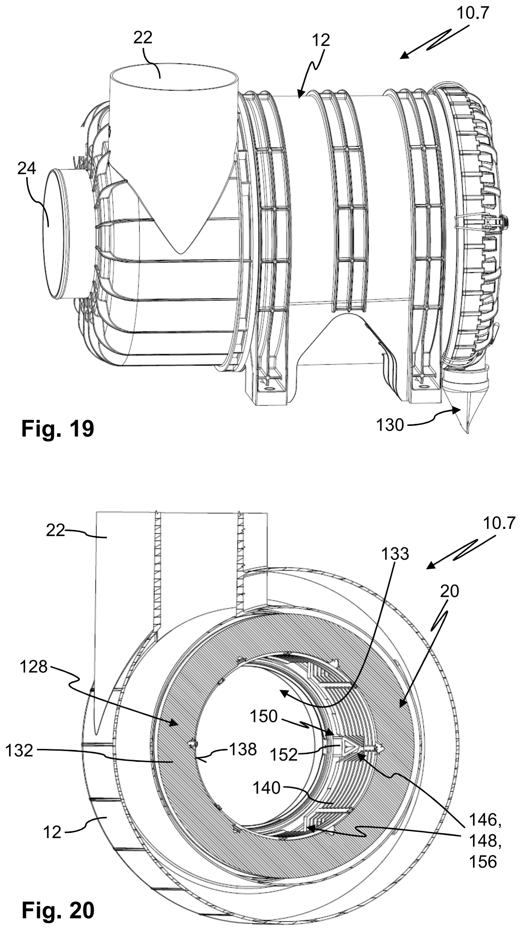

**Figur 19** zeigt ein Filtergehäuse 12 einer siebten Filtervorrichtung **10.7.** Das Filtergehäuse 12 weist einen Fluideinlass 22 und einen Fluidauslass 24 auf. In dem Filtergehäuse 12 ist ein von radial außen nach radial innen durchströmbares Ringfilterelement **128** aufgenommen, welches hier das einzige Ringfilterelement einer Ringfilteranordnung 20 darstellt, vgl. **Figur 20****.** Dem Ringfilterelement 128 fluidisch vorgeschaltet ist ein Zyklonelement, siehe Figur 19, welches eine Vorabscheidung von, insbesondere groben, Staub bewirken kann. Das Zyklonelement umfasst zumindest ein Staubaustragsventil 130.

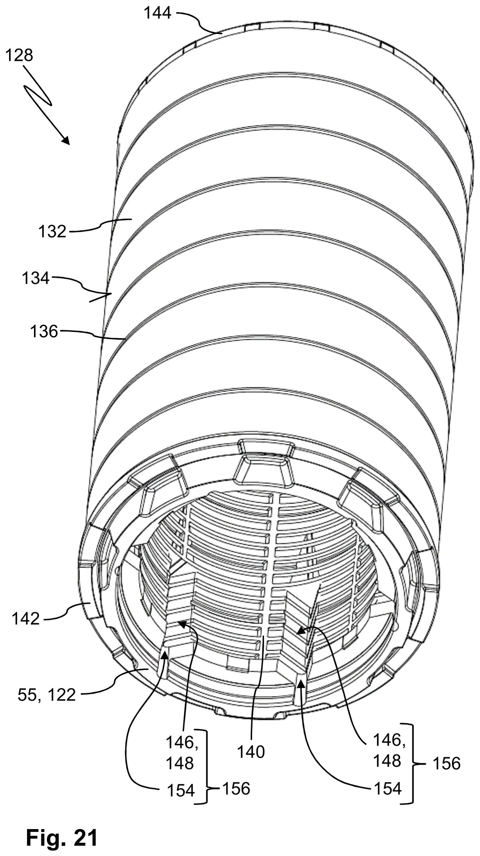

Ein Filtermediumkörper **132** des Ringfilterelements 128 ist als ein Faltenbalg ausgebildet, der einen Innenraum **133** umschließt, vgl. insbesondere Figur 20. An einer Außenmantelfläche **134** ist der Filtermediumkörper 132 durch einen Fadenwickel 136 stabilisiert, vgl. **Figur 21****.** An einer Innenmantelfläche **138,** vgl. auch Figur 20, ist ein Mittelrohr **140** angeordnet, welches hier mit Axialstegen und Umfangsstegen ausgebildet ist. Das Mittelrohr 140 ist einenends in eine offene Endscheibe **142** eingebettet, vgl. Figur 20. Anderenends ist das Mittelrohr und 40 in eine geschlossene Endscheibe **144** eingebettet.

Der Filtermediumkörper 132 ist an der Innenmantelfläche 138 mit mehreren Faltenaufspreizungen **146** versehen. Das Mittelrohr 140 weist für jede der Faltenaufspreizung 146 ein Stützelement **148** auf, welches nach radial außen in die jeweilige Faltenaufspreizung 146 eingreift. Die Stützelemente 148 sind hier als nach radial außen spitz zulaufende Vorsprünge in das Mittelrohr 140 eingeformt und mit dem Mittelrohr 140 einstückig.

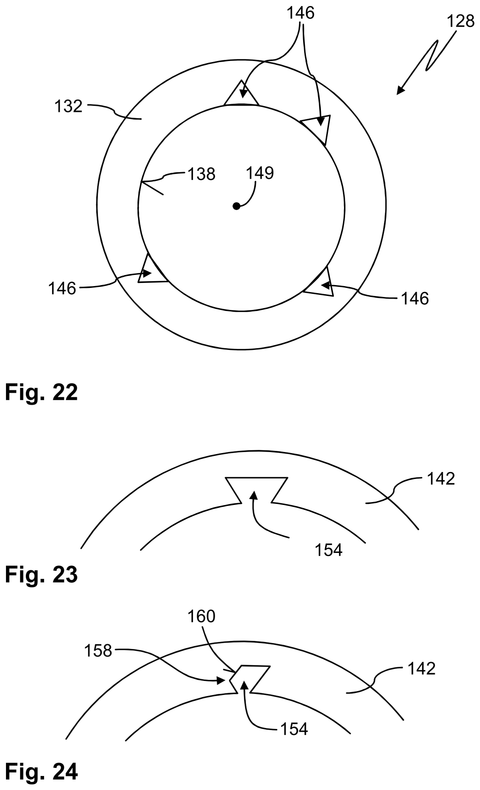

Bei der dargestellten Ausführungsform sind die Faltenaufspreizungen 146 und die Aussparungen 154 gleichmäßig am Innenumfang des Filtermediumkörpers 132 verteilt. Alternativ könnten die Faltenaufspreizungen 146 und Aussparungen der offenen Endscheibe 142 in einem nicht drehsymmetrischen Muster um eine Längsachse **149** des Ringfilterelements 128 verteilt sein, vgl. **Figur 22****.**

Zur Winkelpositionierung des Ringfilterelements 128 gegenüber dem Filtergehäuse 12 weist eine Positioniervorrichtung **150** ein Eingriffselement **152,** hier in Form eines Axialvorsprungs, am Filtergehäuse 12 auf, vgl. Figur 20. Das Eingriffselement 152 greift in eine der Faltenaufspreizungen 146 ein. Um den Eingriff des sich axial erstreckenden Eingriffselements 152 zu ermöglichen, ist die offene Endscheibe 142 an ihrem Innenumfang mit mehreren Aussparungen **154** versehen, wobei jeweils eine der Aussparungen 154 mit einer der Faltenaufspreizungen 146 fluchtet, vgl. Figur 21. Die Aussparungen 154 erstrecken sich dabei auch am Innenumfang eines Dichtwulsts 122, welcher in axialer Richtung von der Endscheibe 42 vorsteht und eine umlaufende Dichtung 55 bildet. Jeweils eine der Faltenaufspreizungen 146 mit dem zugehörigen Stützelement 148 und die zugehörige Aussparung 154 bilden ein Gegeneingriffselement **156** für das Eingriffselement 152.

Bei dem Ringfilterelement 128 verjüngen sich die Aussparungen 154 in der offenen Endscheibe 142 nach radial außen, vgl. insbesondere Figur 21. Alternativ könnte zumindest eine Aussparung 154 in der Endscheibe 142 sich nach radial außen erweitern, vgl. **Figur 23****.** Es ist auch möglich, dass zumindest eine der Aussparungen 154 in der Endscheibe 142 wenigstens eine Knickstelle **158** in zumindest einer ihrer Seitenkanten **160** aufweist, vgl. **Figur 24****.** Eingriffselement 152 weist dann typischerweise einen entsprechenden Querschnitt auf (nicht näher dargestellt). Diese Gestaltungen der Aussparungen und des Eingriffselements sind auch bei den zuvor beschriebenen Ringfilterelementen 26, 26', 28, 28' denkbar.

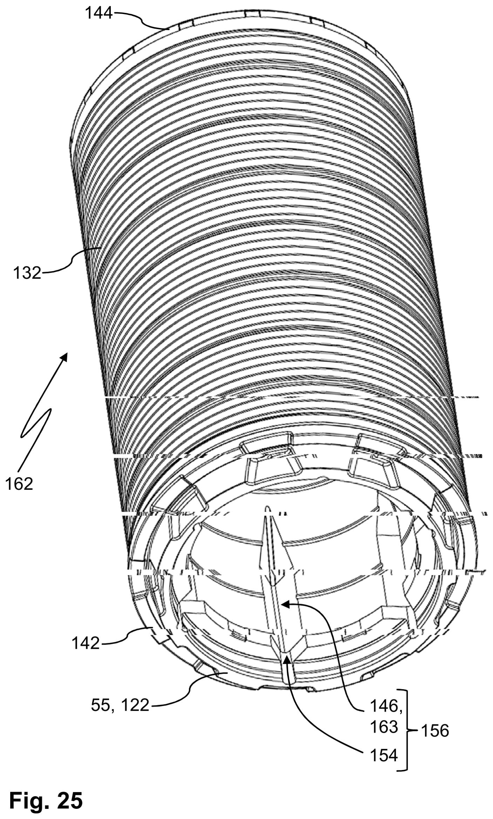

**Figur 25** zeigt ein weiteres Ringfilterelement **162,** das in vielen Aspekten dem Ringfilterelement 128 von Figur 21 entspricht. Nachfolgend werden daher nur die Unterschiede erläutert; im Übrigen sei auf die vorstehende Beschreibung verwiesen. Das Ringfilterelement 162 ist an seiner Innenmantelfläche 138 ohne Mittelrohr ausgebildet. Mit anderen Worten können innere Faltkanten des als Faltenbalg ausgebildete Filtermediumkörpers 132 an der Innenmantelfläche 138 freiliegen. Das Ringfilterelement 162 kann an einer Innenmantelfläche 138 durch zumindest einen inneren Fadenwickel stabilisiert sein, der insbesondere auch die Faltenaufspreizungen 146 in Form hält, sodass benachbarte innere Faltkanten in einem vorbestimmten vergrößerten Abstand 163 zueinander liegen. In Ausführungen umfasst das Ringfilterelement 162 mehrere in Richtung der Längsachse beabstandete innere Fadenwickel.

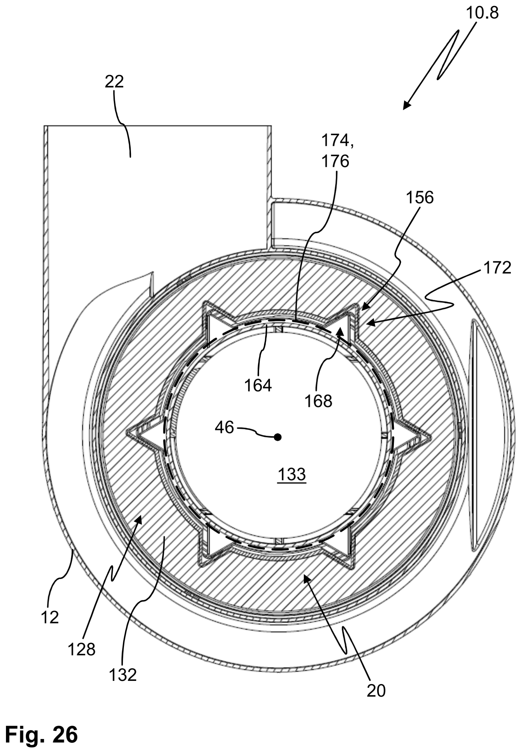

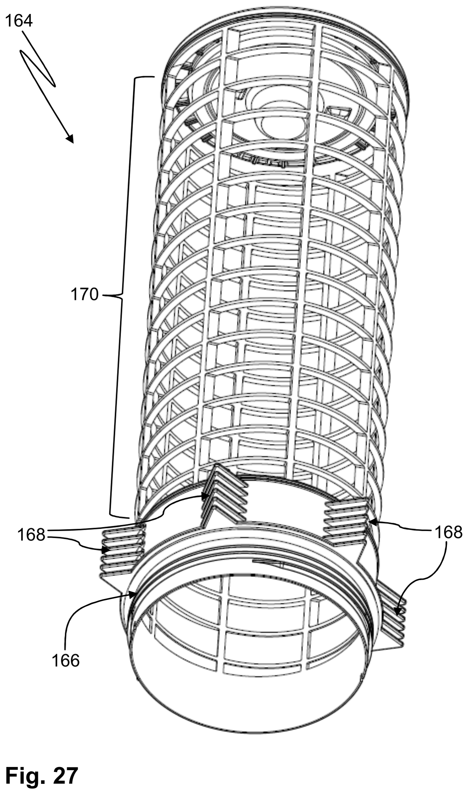

**Figur 26** zeigt eine achte Filtervorrichtung **10.8.** In einem Filtergehäuse 12, das weitgehend dem in Figur 19 gezeigten Filtergehäuse entspricht, ist ein Ringfilterelement, beispielsweise das oben beschriebene und in Figur 21 dargestellte Ringfilterelement 128, aufgenommen. In den Innenraum 133 des Ringfilterelements 128 greift ein Stützrohr **164** ein, welches in **Figur 27** in Alleinstellung gezeigt ist, und welches hier mit Axialstegen und Umfangsstegen gebildet ist. Das Stützrohr 164 weist an einem axialen Ende einen Gewindeabschnitt **166** auf, über welchen es mit einem entsprechenden Gegengewinde des Filtergehäuses 12 verschraubt ist. Ferner weist das Stützrohr 164 wenigstens ein Eingriffselement **168** auf, welches hier mit im Querschnitt dreieckiger Vorsprüngen ausgebildet ist. Vorliegend sind sechs Eingriffselemente 168 über den Umfang verteilt vorgesehen. Die Eingriffselemente 168 sind bei der dargestellten Ausführungsform zwischen dem Gewindeabschnitt 166 und einem gitterartigen Rohrkörper **170** des Stützrohrs 164 angeordnet. Im montierten Zustand der Filtervorrichtung 10.8, vgl. Figur 26, greift jedes der Eingriffselemente 168 in eines der Gegeneingriffselemente 156 des Ringfilterelements 128 ein. Derart fixiert eine mit den Eingriffselementen 168 und den Gegeneingriffselementen 156 gebildete Positioniervorrichtung **172** das Ringfilterelement 128 in einer von mehreren, hier sechs, möglichen Winkelpositionen im Filtergehäuse 12.

Radial außen am Rohrkörper 170 ist ein weiteres Ringfilterelement **174** angeordnet, welches in Figur 26 mit einer gestrichelten Linie dargestellt ist. Das Ringfilterelement 174 ist mit einem weiteren Filtermediumkörper **176,** hier in Form eines Filtervlieses, ausgebildet, wobei der Filtermediumkörper 176 um den Rohrkörper 170 gewickelt ist. Der weitere Filtermediumkörper 176 ist in radialer Richtung zwischen dem Stützrohr 164 und dem Filtermediumkörper 132 des Ringfilterelements 128 aufgenommen. Die beiden Ringfilterelemente 128 und 174 der Ringfilterelementanordnung 20 sind koaxial zu einer gemeinsamen Längsachse 46 angeordnet.

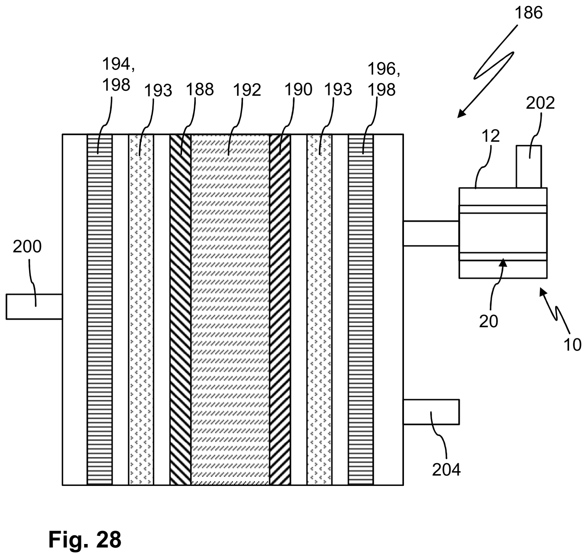

**Figur 28** zeigt eine Brennstoffzelle **186.** Die Brennstoffzelle 186 weist eine Anode **188,** eine Kathode **190** und einen dazwischen angeordneten Elektrolyten **192** auf. Die Anode 188 und die Kathode 190 können nach außen je an eine Gasdiffusionslage **193** angrenzen. Die Anode 188 und die Kathode 190 können zwischen Seitenteilen **194, 196** einer Bipolarplatte **198** aufgenommen sein. Durch das Seitenteil 194 der Bipolarplatte 198 ist Wasserstoff von einem Wasserstoffeinlass **200** zu der Anode 188 leitbar. Durch das Seitenteil 196 der Bipolarplatte 198 ist Sauerstoff oder Sauerstoff enthaltende Luft von einem Lufteinlass **202** zu der Kathode 190 leitbar. Zwischen dem Lufteinlass 202 und der Kathode 188 ist eine Filtervorrichtung 10, beispielsweise eine der oben beschriebenen Filtervorrichtungen 10.1 bis 10.8 mit einer in einem Filtergehäuse 12 angeordneten Ringfilterelementanordnung 20 vorgesehen. Die Filtervorrichtung 10 fungiert somit als ein Kathodenluftfilter. In der Brennstoffzelle 186 entstehendes Wasser ist durch einen Wasserauslass **204** ableitbar. Elektrische Verbindungen der Brennstoffzelle 186 sind nicht näher dargestellt.

Zusammenfassend betrifft die Erfindung ein Ringfilterelement mit einem Filtermediumkörper in Form eines Faltenbalgs, der radial innen wenigstens eine Faltenaufspreizung aufweist, welche an eine offene Endscheibe angrenzt. Die offene Endscheibe weist wenigstens eine Aussparung auf. Die Aussparung und die Faltenaufspreizung sind in Überdeckung miteinander angeordnet. Am von der offenen Endscheibe abgewandten axialen Ende ist der Filtermediumkörper von einer geschlossen Endscheibe abgedichtet. Beim Gebrauch des Ringfilterelements in einer Filtervorrichtung greift ein Eingriffselement in die Faltenaufspreizung und/oder in die Aussparung ein. Das Eingriffselement kann an einem Filtergehäuse oder einem weiteren Ringfilterelement der Filtervorrichtung ausgebildet sein. Somit ist eine Winkelposition des Ringfilterelements bezüglich des Filtergehäuses bzw. des weiteren Ringfilterelements fixiert.

Die Erfindung lässt sich auch anhand der folgenden Sätze beschreiben:
1. Ringfilterelement (26, 28'; 128; 162) zur Luftfiltration, insbesondere zur Filtration der Ansaugluft einer Brennstoffzelle (186),
   aufweisend
   - einen Filtermediumkörper (30, 32; 132), der einen Innenraum (34, 36; 133) umschließt, sowie
   - eine offene Endscheibe (48, 52; 142) und eine geschlossene Endscheibe (50, 54; 144), die den Filtermediumkörper (30, 32; 132) in Axialrichtung dichtend begrenzen,

   wobei der Filtermediumkörper (30, 32; 132) einen Faltenbalg aufweist, der an einer Innenmantelfläche (40; 44; 138) mit einer Faltenaufspreizung (102; 114; 146) versehen ist, und
   wobei die offene Endscheibe (48, 52; 142) eine Aussparung (100; 116; 154) aufweist, die mit der Faltenaufspreizung 102; 114; 146) fluchtet.
2. Ringfilterelement (26, 28'; 128; 162) nach Anspruch 1, wobei im Bereich der Faltenaufspreizung (102; 114; 146) ein Faltenwinkel (106; 120) und/oder Faltenabstand größer ist als bei einer Vielzahl von Falten des Faltenbalgs.
3. Ringfilterelement (26, 28'; 128; 162) nach einem der vorigen Ansprüche, wobei die Faltenaufspreizung (102; 114; 146) sich über einen Teil der Höhe oder die komplette Höhe des Faltenbalgs erstreckt.
4. Ringfilterelement (26, 28'; 128; 162) nach einem der vorigen Ansprüche, wobei der Filtermediumkörper (30, 32; 132) eine hohlzylindrische Form aufweist.
5. Ringfilterelement (128; 162) nach einem der vorigen Ansprüche, wobei mehrere Faltenaufspreizungen (146) über den Innenumfang des Faltenbalgs verteilt vorliegen, und wobei die offene Endscheibe (142) mehrere Aussparungen (154) aufweist, von denen jeweils eine mit einer der Faltenaufspreizungen (146) fluchtet.
6. Ringfilterelement (128; 162) nach Anspruch 5, wobei die Faltenaufspreizungen (146) und Aussparungen (154) bezüglich einer Längsachse (149) in einem nicht drehsymmetrischen Muster angeordnet sind.
7. Ringfilterelement (26, 28'; 128; 162) nach einem der vorigen Ansprüche, wobei die zumindest eine Aussparung (100; 116; 154) der offenen Endscheibe (48, 52; 142) radial innen offen ist.
8. Ringfilterelement (26, 28'; 128; 162) nach einem der vorigen Ansprüche, wobei die Aussparung sich nach radial außen verjüngt und/oder sich nach radial außen erweitert und/oder wobei wenigstens eine Seitenkante (160) der Aussparung (100; 116; 154) wenigstens eine Knickstelle (158) aufweist.
9. Ringfilterelement (128) nach einem der vorigen Ansprüche, weiterhin aufweisend ein fluiddurchlässiges Mittelrohr (140), das an der Innenmantelfläche (138) des Filtermediumkörpers (132) angeordnet ist und mittelbar oder unmittelbar an dem Filtermediumkörper (132) befestigt ist, wobei an dem Mittelrohr (140) zumindest ein Stützelement (148) angeordnet ist, insbesondere wobei das Stützelement (148) und das Mittelrohr (140) einteilig miteinander sind, wobei sich das Stützelement (148) nach radial außen in die Faltenaufspreizung (146) erstreckt.
10. Ringfilterelement (26, 28'; 128; 162) nach einem der vorigen Ansprüche, wobei die offene Endscheibe (48, 52; 142) zumindest eine durchgängig umlaufende Dichtung (55) zur Anlage an einem Filtergehäuse (12) aufweist, insbesondere wobei die Dichtung (55) als ein in axialer Richtung vorstehender Dichtwulst (122) gebildet ist.
11. Ringfilterelement (26, 28') nach Anspruch 10, wobei die Dichtung (55) die wenigstens eine Aussparung (100; 116) radial außen umläuft, vorzugsweise wobei die Dichtung (55) im Bereich der Aussparung (100; 116) eine Ausbuchtung (126) nach radial außen aufweist.
12. Ringfilterelement (128; 162) nach Anspruch 10, wobei die wenigstens eine Aussparung (154) sich am Innenumfang der Dichtung (55) in axialer Richtung erstreckt, insbesondere wobei die Dichtung (55) am Innenumfang zumindest eine Ausnehmung aufweist, die mit der Aussparung (154) fluchtet.
13. Filtervorrichtung (10.1-10.8) aufweisend ein Filtergehäuse (12) mit zumindest einem Fluideinlass (22) und einem Fluidauslass (24) und weiterhin aufweisend eine Ringfilterelementanordnung (20), die in dem Filtergehäuse (12) angeordnet ist und den Fluideinlass (22) von dem Fluidauslass (24) trennt, wobei die Ringfilterelementanordnung (20) zumindest ein erstes Ringfilterelement (26, 28'; 128; 162) nach einem der vorigen Ansprüche aufweist, wobei die Filtervorrichtung (10.1-10.8) eine Positioniervorrichtung (60; 108; 150; 172) mit zumindest einem sich nach radial außen erstreckenden Eingriffselement (62; 110; 152; 168) aufweist, wobei die Faltenaufspreizung (102; 114; 146) an der Innenmantelfläche (40; 44; 138) des Filtermediumkörpers (30, 32; 132) des ersten Ringfilterelements (26, 28'; 128; 162) ein Gegeneingriffselement (98; 112; 156) zumindest mit bildet, und wobei das Eingriffselement (62; 110; 152; 168) in das Gegeneingriffselement (98; 112; 156) eingreift.
14. Filtervorrichtung (10.1-10.5; 10.8) nach Anspruch 13, weiterhin aufweisend ein an dem Filtergehäuse (12) befestigtes, insbesondere unlösbar befestigtes, Stützrohr (96; 111; 164), das lösbar in dem Innenraum (34, 36; 133) des Filtermediumkörpers (30, 32; 132) des ersten Ringfilterelements (26; 28'; 162) angeordnet ist, wobei das Eingriffselement (62; 110; 168) der Positioniervorrichtung (68; 108; 172) an dem Stützrohr (96; 111; 164) angeordnet ist.
15. Filtervorrichtung (10.8) nach Anspruch 14, wobei radial außen an dem Stützrohr (164) ein weiterer Filtermediumkörper (176) eines weiteren Ringfilterelements (174) der Ringfilterelementanordnung (20) mittelbar oder unmittelbar befestigt ist.
16. Filtervorrichtung (10.1; 10.5) nach Anspruch 14, wobei radial innerhalb des Stützrohrs (96) ein inneres Ringfilterelement (28; 28') der Ringfilterelementanordnung (20) angeordnet ist, welches an einer Außenmantelfläche (42) ein zweites Gegeneingriffselement (64) aufweist, wobei ein Eingriffselement (62) des Stützrohrs (96) nach radial außen in das Gegeneingriffselement (98) des ersten Ringfilterelements (26) und ein Eingriffselement (62) des Stützrohrs (96) nach radial innen in das zweite Gegeneingriffselement (64) des inneren Ringfilterelements (28; 28') eingreift.
17. Filtervorrichtung (10.2-10.6) nach einem der Ansprüche 13 bis 16, wobei die Ringfilterelementanordnung (20) weiterhin ein äußeres Ringfilterelement (26; 26') mit einem Filtermediumkörper (30) aufweist, wobei der Filtermediumkörper (30) des äußeren Ringfilterelements (26; 26') einen Innenraum (34) umschließt, wobei das erste Ringfilterelement (28') zumindest teilweise in dem Innenraum (34) des Filtermediumkörpers (30) des äußeren Ringfilterelements (26; 26') aufgenommen ist.
18. Filtervorrichtung (10.2-10.6) nach Anspruch 17, wobei das Filtergehäuse (12) eine Gehäuse-Positioniervorrichtung (82) zur, insbesondere eindeutigen, relativen Winkelpositionierung des äußeren Ringfilterelements (26; 26') gegenüber dem Filtergehäuse (12) aufweist, wobei die Gehäuse-Positioniervorrichtung (82) ein Gehäuse-Eingriffselement (84) aufweist, das sich insbesondere nach radial innen erstreckt und in ein korrespondierendes Gehäuse-Gegeneingriffselement (86) des äußeren Ringfilterelements (26; 26') eingreift.
19. Filtervorrichtung (10.2; 10.6) nach Anspruch 17 oder 18, wobei das äußere Ringfilterelement (26') ein fluiddurchlässiges Innenrohr (56) aufweist, das an der Innenmantelfläche (40) des Filtermediumkörpers (30) des äußeren Ringfilterelements (26') angeordnet ist und mittelbar oder unmittelbar an dem Filtermediumkörper (20) des äußeren Ringfilterelements (26') befestigt ist, und wobei an dem Innenrohr (56) ein weiteres Eingriffselement (62') angeordnet ist, insbesondere einteilig mit dem Innenrohr (56) ist, wobei sich das weitere Eingriffselement (62') nach radial innen erstreckt und in ein weiteres Gegeneingriffselement (64') an der Außenmantelfläche (42) des Filtermediumkörpers (32) des ersten Ringfilterelements (28') eingreift.
20. Verwendung einer Filtervorrichtung (10.1-10.8) nach einem der Ansprüche 13 bis 19 als Kathodenluftfilter einer Brennstoffzelle (186).
21. Verwendung eines Ringfilterelements (26, 28'; 128; 162) nach einem der Ansprüche 1 bis 12 in einer Filtervorrichtung (10.1-10.8) mit einem Filtergehäuse (12), wobei ein an dem Filtergehäuse (12) angeordnetes Eingriffselement (62; 110; 152; 168) in die Faltenaufspreizung (102; 114; 146) eingreift.

### Bezugszeichenliste

Filtervorrichtung **10.1; 10.2; 10.3; 10.4; 10.5; 10.6; 10.7; 10.8; 10**
Filtergehäuse **12**
Gehäuseoberteil 14
Gehäuseunterteil 16
Ringfilterelementanordnung **20**
Fluideinlass **22**
Fluidauslass **24**
erstes, äußeres Ringfilterelement **26**
äußeres Ringfilterelement **26'**
inneres Ringfilterelement **28**
erstes, inneres Ringfilterelement **28'**
Filtermediumkörper **30** des äußeren Ringfilterelements 26/26'
Filtermediumkörper **32** des inneren Ringfilterelements 28/28'
Innenraum **34** des äußeren Ringfilterelements 26/26'
Innenraum **36** des inneren Ringfilterelements 28/28'
Außenmantelfläche **38** des Filtermediumkörpers 30
Innenmantelfläche **40** des Filtermediumkörpers 30
Außenmantelfläche **42** des Filtermediumkörpers 32
Innenmantelfläche **44** des Filtermediumkörpers 32
Längsachse **46a** des Ringfilterelements 26/26'
Längsachse **46b** des Ringfilterelements 28/28'
gemeinsame Längsachse **46**
offene Endscheibe **48** des Ringfilterelements 26/26'
geschlossene Endscheibe **50** des Ringfilterelements 26/26'
offene Endscheibe **52** des Ringfilterelements 28/28'
geschlossene Endscheibe **54** des Ringfilterelement 28/28'
Dichtung **55** an der offenen Endscheibe 48
Innenrohr **56** des Ringfilterelements 26'
Schnittstellenbereich **58**
Positioniervorrichtung **60**
weitere Positioniervorrichtung **60'**
Eingriffselement **62**
weiteres Eingriffselement **62'**
Gegeneingriffselement **64** des Ringfilterelements 28
weiteres Gegeneingriffselement **64'** des Ringfilterelements 28'
Aussparung **65** radial außen in der Endscheibe 54
Aussparung **65'** radial außen in der Endscheibe 52
Faltenaufspreizung **66** an der Außenmantelfläche 42 des zweiten Filtermediumkörpers 32
radial äußere Falzkanten **68** des zweiten Filtermediumkörpers 32
Faltenwinkel **70**
Ausnehmung **72**
Axialvorsprung **74** am Filtergehäuse 12
Zentralrohr **76**
Gehäuse-Positioniervorrichtung **82**
Gehäuse-Eingriffselement **84**
Gehäuse-Gegeneingriffselement **86**
Faltenaufspreizung **88** an der Außenmantelfläche 38 des Filtermediumkörpers 30
Aussparung **90** radial außen in der Endscheibe 50
radial äußere Falzkanten **92** des Filtermediumkörpers 30
Faltenwinkel **94**
gehäusefestes Stützrohr **96**
Gegeneingriffselement **98** des Ringfilterelements 26
Aussparung **100** radial innen in der Endscheibe 48
zentrale Öffnung **101** der offenen Endscheibe 48
Faltenaufspreizung **102** an der Innenmantelfläche 40 des Filtermediumkörpers 30
radial innere Falzkanten **104** des ersten Filtermediumkörpers 30
Faltenwinkel **106**
Positioniervorrichtung **108**
Eingriffselement **110**
gehäusefestes Stützrohr **111**
Gegeneingriffselement **112** am Ringfilterelement 28'
Faltenaufspreizung **114** an der Innenmantelfläche 44 des Filtermediumkörpers 32
Aussparung **116** radial innen in der Endscheibe 52
radial innere Falzkanten **118** des Filtermediumkörpers 32
Faltenwinkel 120
Dichtwulst **122**
zentrale Öffnung **123** der offenen Endscheibe 52
Einbuchtung **124**
Ausbuchtung **126**
Ringfilterelement **128; 162**
Staubaustragsventil **130**
Filtermediumkörper **132**
Innenraum **133** des Ringfilterelements 128/162
Außenmantelfläche **134** des Ringfilterelements 128/162
Fadenwickel 136
Innenmantelfläche **138** des Ringfilterelements 128/162
Mittelrohr **140**
offene Endscheibe **142** des Ringfilterelements 128/162
geschlossene Endscheibe **144** des Ringfilterelements 128/162
Faltenaufspreizung **146** an Innenmantelfläche 138 des Ringfilterelements 128/162
Stützelement **148**
Längsachse **149** des Ringfilterelements 128/162
Positioniervorrichtung **150**
Eingriffselement **152**
Aussparung **154** radial innen in der Endscheibe 142
Gegeneingriffselement **156**
Knickstelle **158**
Seitenkante **160**
vergrößerter Abstand von Faltkanten **163**
gehäusefestes Stützrohr **164**
Gewindeabschnitt **166**
Eingriffselement **168**
Rohrkörper **170**
Positioniervorrichtung **172**
weiteres Ringfilterelement **174**
weiteres Filtermediumkörper **176**
Brennstoffzelle **186**
Anode **188**
Kathode **190**
Elektrolyt **192**
Gasdiffusionslage **193**
Seitenteile **194, 196**
Bipolarplatte **198**
Wasserstoffeinlass **200**
Lufteinlass **202**
Wasserauslass **204**

## Patentansprüche

1. Ringfilterelement (26, 28'; 128; 162) zur Luftfiltration, insbesondere zur Filtration der Ansaugluft einer Brennstoffzelle (186),
aufweisend
- einen Filtermediumkörper (30, 32; 132), der einen Innenraum (34, 36; 133) umschließt, sowie
- eine offene Endscheibe (48, 52; 142) und eine geschlossene Endscheibe (50, 54; 144), die den Filtermediumkörper (30, 32; 132) in Axialrichtung dichtend begrenzen,
wobei der Filtermediumkörper (30, 32; 132) einen Faltenbalg aufweist, der an einer Innenmantelfläche (40; 44; 138) mit einer Faltenaufspreizung (102; 114; 146) versehen ist, und
wobei die offene Endscheibe (48, 52; 142) eine Aussparung (100; 116; 154) aufweist, die mit der Faltenaufspreizung 102; 114; 146) fluchtet.

2. Ringfilterelement (26, 28'; 128; 162) nach Anspruch 1, wobei im Bereich der Faltenaufspreizung (102; 114; 146) ein Faltenwinkel (106; 120) und/oder Faltenabstand größer ist als bei einer Vielzahl von Falten des Faltenbalgs, und/oder die Faltenaufspreizung (102; 114; 146) sich über einen Teil der Höhe oder die komplette Höhe des Faltenbalgs erstreckt.

3. Ringfilterelement (26, 28'; 128; 162) nach einem der vorigen Ansprüche, wobei der Filtermediumkörper (30, 32; 132) eine hohlzylindrische Form aufweist.

4. Ringfilterelement (128; 162) nach einem der vorigen Ansprüche, wobei mehrere Faltenaufspreizungen (146) über den Innenumfang des Faltenbalgs verteilt vorliegen, und wobei die offene Endscheibe (142) mehrere Aussparungen (154) aufweist, von denen jeweils eine mit einer der Faltenaufspreizungen (146) fluchtet, wobei optional die Faltenaufspreizungen (146) und Aussparungen (154) bezüglich einer Längsachse (149) in einem nicht drehsymmetrischen Muster angeordnet sind.

5. Ringfilterelement (26, 28'; 128; 162) nach einem der vorigen Ansprüche, wobei die zumindest eine Aussparung (100; 116; 154) der offenen Endscheibe (48, 52; 142) radial innen offen ist.

6. Ringfilterelement (26, 28'; 128; 162) nach einem der vorigen Ansprüche, wobei die Aussparung sich nach radial außen verjüngt und/oder sich nach radial außen erweitert und/oder wobei wenigstens eine Seitenkante (160) der Aussparung (100; 116; 154) wenigstens eine Knickstelle (158) aufweist.

7. Ringfilterelement (128) nach einem der vorigen Ansprüche, weiterhin aufweisend ein fluiddurchlässiges Mittelrohr (140), das an der Innenmantelfläche (138) des Filtermediumkörpers (132) angeordnet ist und mittelbar oder unmittelbar an dem Filtermediumkörper (132) befestigt ist, wobei an dem Mittelrohr (140) zumindest ein Stützelement (148) angeordnet ist, insbesondere wobei das Stützelement (148) und das Mittelrohr (140) einteilig miteinander sind, wobei sich das Stützelement (148) nach radial außen in die Faltenaufspreizung (146) erstreckt, und/oder die offene Endscheibe (48, 52; 142) zumindest eine durchgängig umlaufende Dichtung (55) zur Anlage an einem Filtergehäuse (12) aufweist, insbesondere wobei die Dichtung (55) als ein in axialer Richtung vorstehender Dichtwulst (122) gebildet ist.

8. Ringfilterelement (26, 28') nach Anspruch 7, wobei die Dichtung (55) die wenigstens eine Aussparung (100; 116) radial außen umläuft, vorzugsweise wobei die Dichtung (55) im Bereich der Aussparung (100; 116) eine Ausbuchtung (126) nach radial außen aufweist, oder die wenigstens eine Aussparung (154) sich am Innenumfang der Dichtung (55) in axialer Richtung erstreckt, insbesondere wobei die Dichtung (55) am Innenumfang zumindest eine Ausnehmung aufweist, die mit der Aussparung (154) fluchtet.

9. Filtervorrichtung (10.1-10.8) aufweisend ein Filtergehäuse (12) mit zumindest einem Fluideinlass (22) und einem Fluidauslass (24) und weiterhin aufweisend eine Ringfilterelementanordnung (20), die in dem Filtergehäuse (12) angeordnet ist und den Fluideinlass (22) von dem Fluidauslass (24) trennt, wobei die Ringfilterelementanordnung (20) zumindest ein erstes Ringfilterelement (26, 28'; 128; 162) nach einem der vorigen Ansprüche aufweist, wobei die Filtervorrichtung (10.1-10.8) eine Positioniervorrichtung (60; 108; 150; 172) mit zumindest einem sich nach radial außen erstreckenden Eingriffselement (62; 110; 152; 168) aufweist, wobei die Faltenaufspreizung (102; 114; 146) an der Innenmantelfläche (40; 44; 138) des Filtermediumkörpers (30, 32; 132) des ersten Ringfilterelements (26, 28'; 128; 162) ein Gegeneingriffselement (98; 112; 156) zumindest mit bildet, und wobei das Eingriffselement (62; 110; 152; 168) in das Gegeneingriffselement (98; 112; 156) eingreift.

10. Filtervorrichtung (10.1-10.5; 10.8) nach Anspruch 9, weiterhin aufweisend ein an dem Filtergehäuse (12) befestigtes, insbesondere unlösbar befestigtes, Stützrohr (96; 111; 164), das lösbar in dem Innenraum (34, 36; 133) des Filtermediumkörpers (30, 32; 132) des ersten Ringfilterelements (26; 28'; 162) angeordnet ist, wobei das Eingriffselement (62; 110; 168) der Positioniervorrichtung (68; 108; 172) an dem Stützrohr (96; 111; 164) angeordnet ist.

11. Filtervorrichtung (10.8) nach Anspruch 10, wobei radial außen an dem Stützrohr (164) ein weiterer Filtermediumkörper (176) eines weiteren Ringfilterelements (174) der Ringfilterelementanordnung (20) mittelbar oder unmittelbar befestigt ist, oder radial innerhalb des Stützrohrs (96) ein inneres Ringfilterelement (28; 28') der Ringfilterelementanordnung (20) angeordnet ist, welches an einer Außenmantelfläche (42) ein zweites Gegeneingriffselement (64) aufweist, wobei ein Eingriffselement (62) des Stützrohrs (96) nach radial außen in das Gegeneingriffselement (98) des ersten Ringfilterelements (26) und ein Eingriffselement (62) des Stützrohrs (96) nach radial innen in das zweite Gegeneingriffselement (64) des inneren Ringfilterelements (28; 28') eingreift.

12. Filtervorrichtung (10.2-10.6) nach einem der Ansprüche 9 bis 11, wobei die Ringfilterelementanordnung (20) weiterhin ein äußeres Ringfilterelement (26; 26') mit einem Filtermediumkörper (30) aufweist, wobei der Filtermediumkörper (30) des äußeren Ringfilterelements (26; 26') einen Innenraum (34) umschließt, wobei das erste Ringfilterelement (28') zumindest teilweise in dem Innenraum (34) des Filtermediumkörpers (30) des äußeren Ringfilterelements (26; 26') aufgenommen ist, wobei optional das Filtergehäuse (12) eine Gehäuse-Positioniervorrichtung (82) zur, insbesondere eindeutigen, relativen Winkelpositionierung des äußeren Ringfilterelements (26; 26') gegenüber dem Filtergehäuse (12) aufweist, wobei die Gehäuse-Positioniervorrichtung (82) ein Gehäuse-Eingriffselement (84) aufweist, das sich insbesondere nach radial innen erstreckt und in ein korrespondierendes Gehäuse-Gegeneingriffselement (86) des äußeren Ringfilterelements (26; 26') eingreift.

13. Filtervorrichtung (10.2; 10.6) nach Anspruch 12, wobei das äußere Ringfilterelement (26') ein fluiddurchlässiges Innenrohr (56) aufweist, das an der Innenmantelfläche (40) des Filtermediumkörpers (30) des äußeren Ringfilterelements (26') angeordnet ist und mittelbar oder unmittelbar an dem Filtermediumkörper (20) des äußeren Ringfilterelements (26') befestigt ist, und wobei an dem Innenrohr (56) ein weiteres Eingriffselement (62') angeordnet ist, insbesondere einteilig mit dem Innenrohr (56) ist, wobei sich das weitere Eingriffselement (62') nach radial innen erstreckt und in ein weiteres Gegeneingriffselement (64') an der Außenmantelfläche (42) des Filtermediumkörpers (32) des ersten Ringfilterelements (28') eingreift.

14. Verwendung einer Filtervorrichtung (10.1-10.8) nach einem der Ansprüche 9 bis 13 als Kathodenluftfilter einer Brennstoffzelle (186).

15. Verwendung eines Ringfilterelements (26, 28'; 128; 162) nach einem der Ansprüche 1 bis 8 in einer Filtervorrichtung (10.1-10.8) mit einem Filtergehäuse (12), wobei ein an dem Filtergehäuse (12) angeordnetes Eingriffselement (62; 110; 152; 168) in die Faltenaufspreizung (102; 114; 146) eingreift.
